# EUROPEAN PATENT APPLICATION

(11) **EP 4 345 037 A1**
(43) Date of publication of application: **03.04.2024**
(21) Application number: 23179061.9
(22) Date of filing: 07.10.2020
(51) Int. Cl.: B65G 47/91, B25B 11/00, B25J 15/06, B66C 1/02, B25J 15/00

(54) **A DEVICE FOR GRIPPING OR GRASPING PRODUCTS**

(30) Priority: 08.10.2019 IT 201900018278
(62) Divisional of application: 20803254.0
(71) Applicant: Pulsar S.r.l., 40013 Castel Maggiore (Bologna) (IT)
(72) Inventor: FRANZAROLI, Massimo, 40013 Castel Maggiore (BO) (IT)
(74) Representative: Fanzini, Valeriano

(57) **Abstract**

A device (10) for gripping or grasping products, said products being in particular in the form of packages, in a preferred manner defined by a corresponding envelope, for example made of a plastic film, or a paper sheet, or other, or made of cardboard which wraps or contains one or more articles; in particular said articles being articles of the so-called Tissue field and preferably being made of paper material or other material, such as woven fabric or non-woven fabric, and preferentially being in the form of rolls, in particular rolls of toilet paper, of kitchen paper or for another use, or rolls for the treatment of food products, such as rolls of aluminium foil, plastic film, wax paper film, and the like, i.e., said articles being in the form of packaging, in particular packs, packets or other containers, in particular for napkins, handkerchiefs, small towels for hands and face, hand towels, bed sheets, and other. The device comprises supporting means (12) for means (14) for engaging and holding by suctioning the respective product. Said means (14) for engaging and holding by suctioning the respective product define a first (141) and a second (142) surfaces for engaging and holding by suctioning the same product, in particular angularly spaced apart, preferably angularly spaced by an angle equal to, or substantially equal to, 90°.

## Description

### Application field of the present invention

The present invention relates to a device for gripping or grasping products.

Preferably, said products are in the form of packages, in a preferred manner defined by a corresponding envelope, for example made of a plastic film, or a paper sheet, or other, or made of cardboard which wraps or contains one or more articles.

In particular said articles being articles of the so-called Tissue field and preferably being made of paper material or other material, such as woven fabric or non-woven fabric, and preferentially being in the form of rolls, in particular rolls of toilet paper, of kitchen paper or for another use, i.e., rolls for the treatment of food products, such as rolls of aluminium foil, plastic film, wax paper film, and the like.

Said articles can also be in the form of respective packaging, in particular packs, packets or other containers, in particular for napkins, handkerchiefs, small towels for hands and face, hand towels, bed sheets, and other. Other articles that are treated through the present device for gripping and grasping products, for example, consist in sanitary pads for personal care and corresponding packages or packaging.

### State of the art

Devices for gripping or grasping products are known, which devices comprise supporting means for means for engaging and holding by suctioning the respective product.

According to an already known type of devices for gripping or grasping products, suction cups for engaging the corresponding surface of the product are used, which suction cups, however, do not allow exerting a sufficiently high holding action and, therefore, do not allow achieving a safe and reliable grip.

In other types of devices for gripping and grasping solid pieces, having a high weight, suctioning members are usually used, which firmly engage the upper surface of the product, which therefore turn out to be completely unsuitable when it is desired to grasp products that are, or that have, their respective outer surface that is particularly weak or delicate to be treated.

### Summary of the invention.

By the present invention, it is aimed to propose a novel, alternative solution to the solutions known to date, and in particular it is proposed to obviate one or more of the drawbacks or problems cited above and/or to meet one or more needs cited above, and/or anyhow felt in the art, and in particular derivable from what has been set forth herein above.

Therefore, it is provided a device for gripping or grasping products according to claim 1.

### Brief description of the drawings

This and other novel aspects, or specific advantageous implementations, are anyhow set forth in the claims cited below, the technical characteristics of which can be found in the following detailed description, illustrating preferred and advantageous embodiments, which are however to be considered as merely exemplary and non-limiting of the invention; said description being given by reference to the attached drawings, in which:

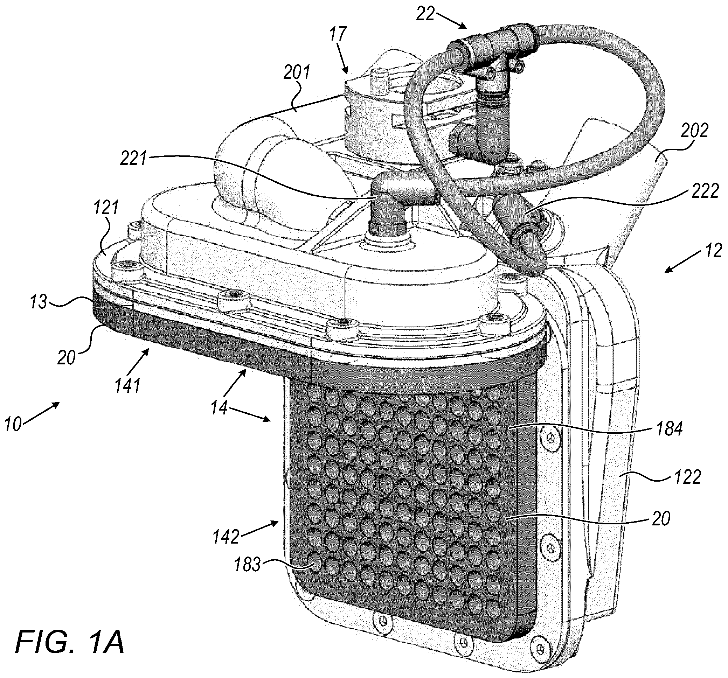

- figure 1A illustrates a perspective, schematic view of a first preferred implementation of device according to the present invention;

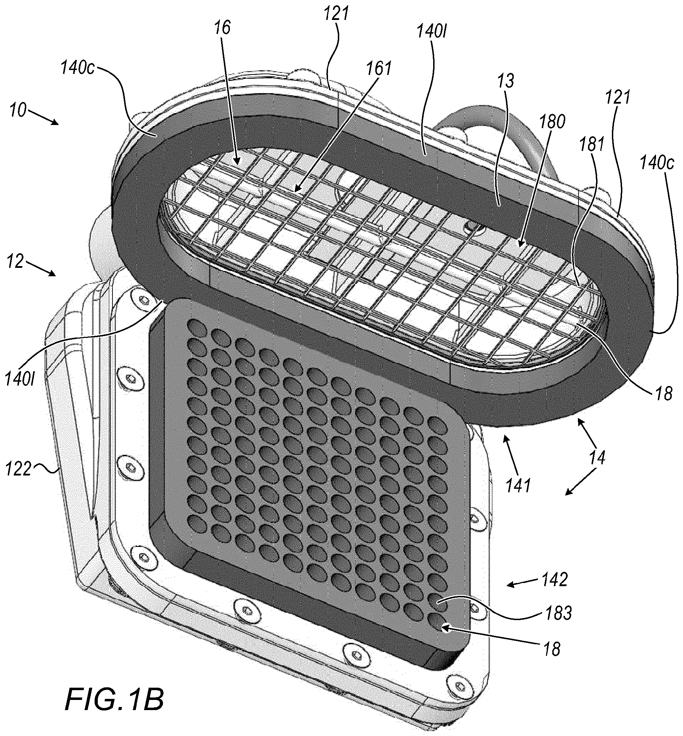

- figure 1B illustrates a perspective, schematic view, taken from a different direction from the one of figure 1A, of the first preferred implementation of device according to the present invention;

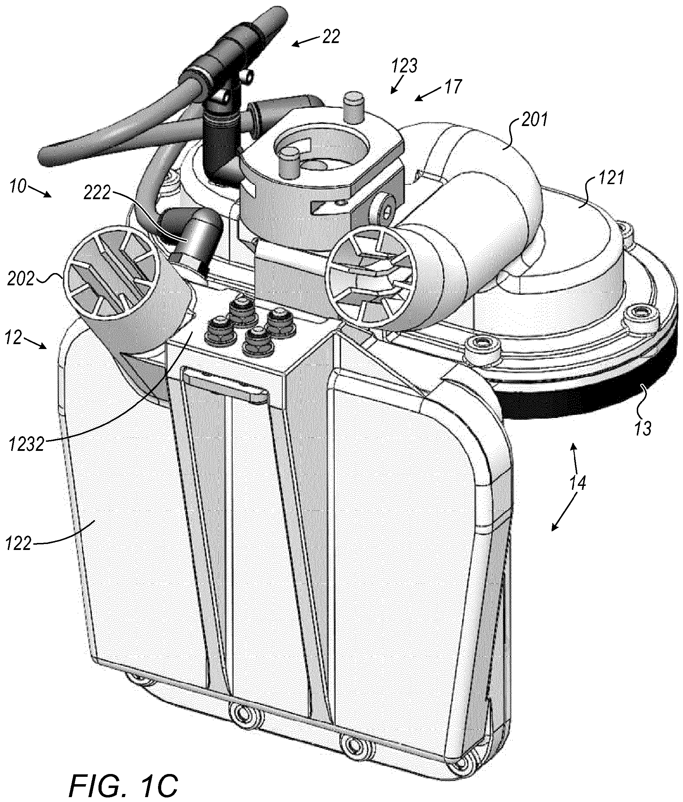

- figure 1C illustrates a perspective, schematic view, taken on the opposite side with respect to the one of figure 1A, of the first preferred implementation of device according to the present invention;

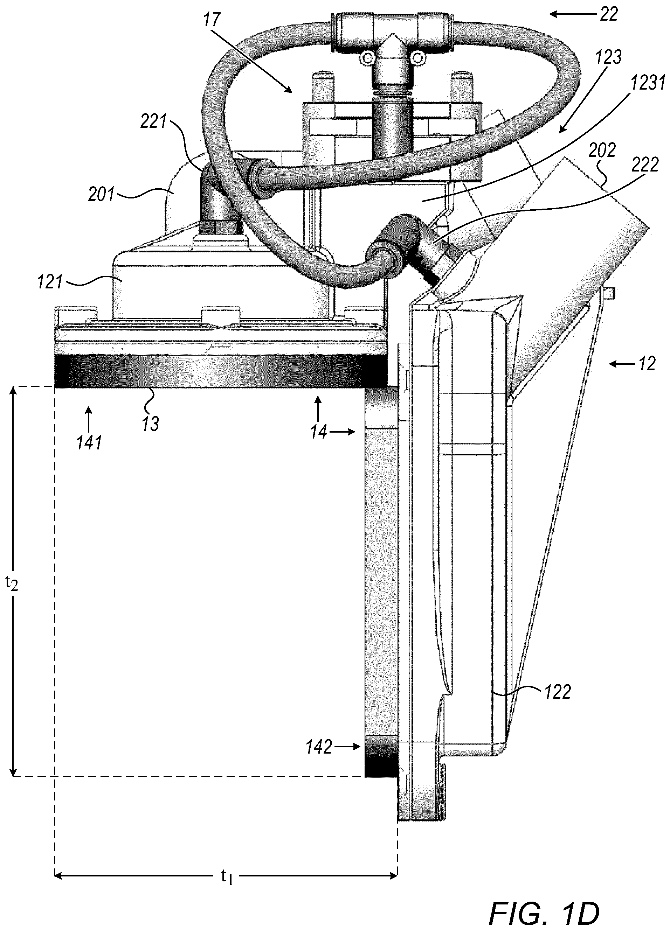

- figure 1D illustrates a side elevational view of the first preferred implementation of device according to the present invention;

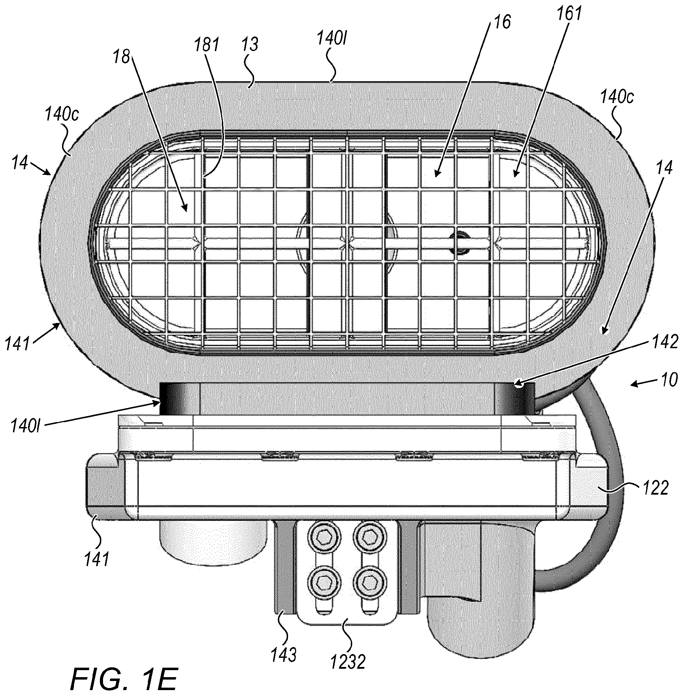

- figure 1E illustrates bottom plan view of the first preferred implementation of device according to the present invention;

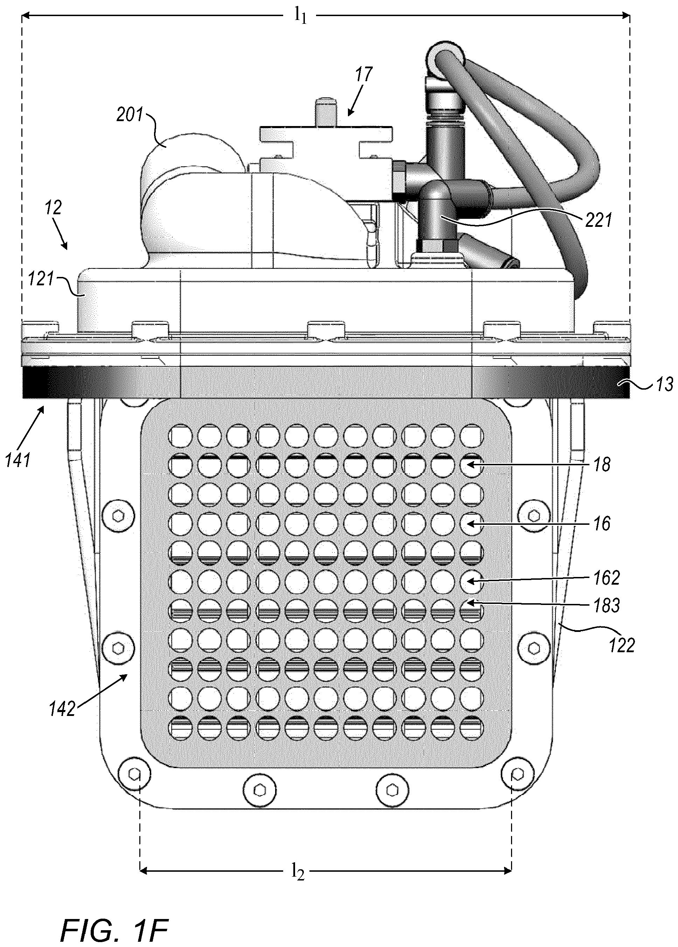

- figure 1F illustrates front elevational view of the first preferred implementation of device according to the present invention;

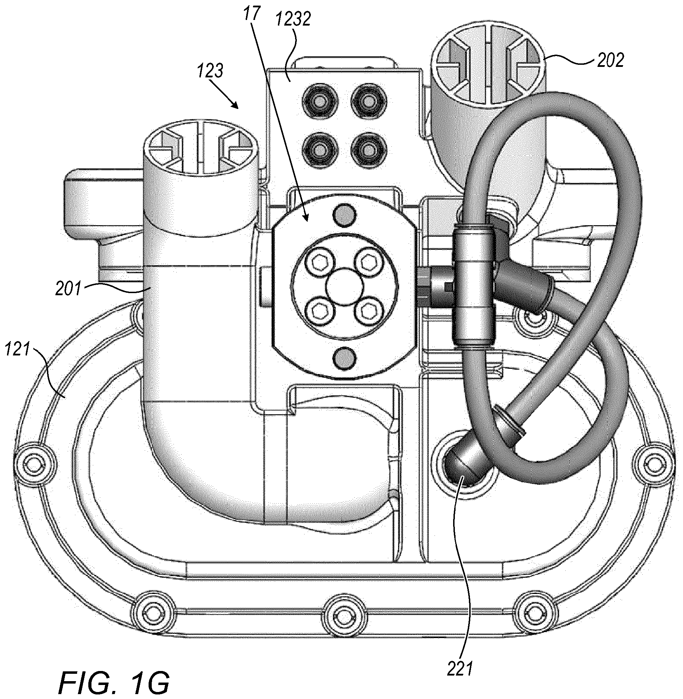

- figure 1G illustrates top plan view of the first preferred implementation of device according to the present invention;

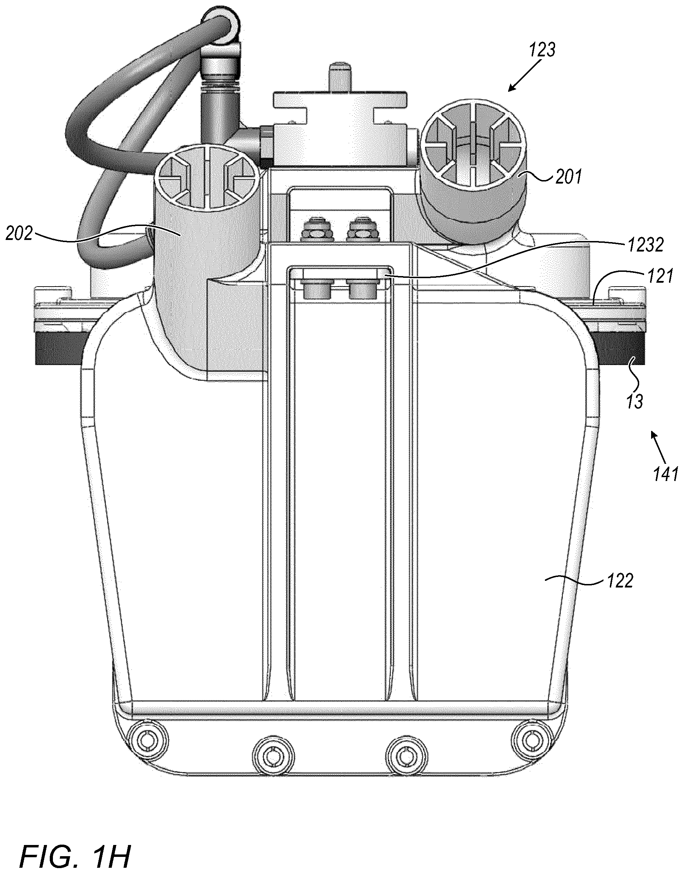

- figure 1H illustrates rear elevational view of the first preferred implementation of device according to the present invention;

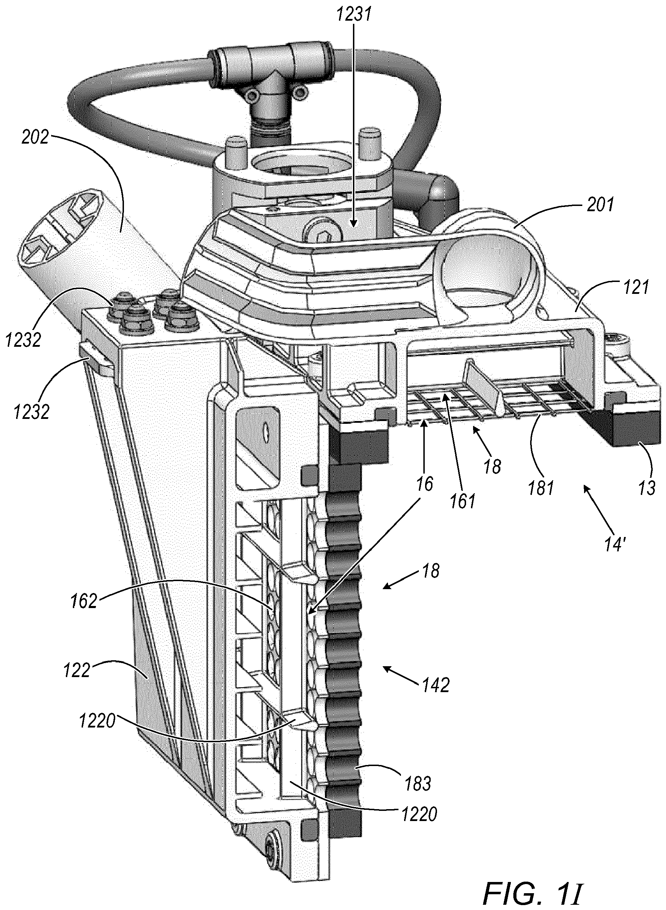

- figure 1I illustrates a cross-sectional perspective view of the first preferred implementation of device according to the present invention;

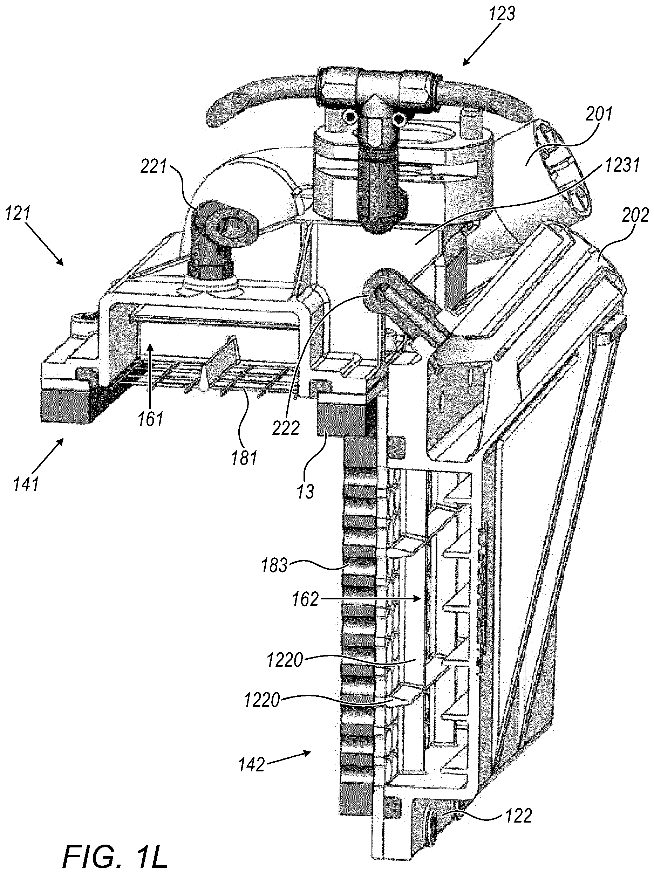

- figure 1L illustrates a cross-sectional perspective view, taken on the opposite side with respect to the one of figure 1I, of the first preferred implementation of device according to the present invention;
- figured 2A to 2C illustrate in respective cross-sectional perspective views a second version of the first preferred implementation of device according to the present invention;
- figure 3A illustrates a perspective view of a second preferred implementation of device according to the present invention, in a first configuration of use;
- figure 3B illustrates a perspective view of the second preferred implementation of device according to the present invention, in the first configuration of use, taken on the opposite side with respect to the one of figure 3A;
- figure 3C illustrates a side elevational view of the second preferred implementation of device according to the present invention, in the first configuration of use;
- figure 3D illustrates a perspective view of the second preferred implementation of device according to the present invention, particularly illustrating a cross-section of the inner part of the first supporting means of the device;
- figure 3E illustrates a perspective view of the second preferred implementation of device according to the present invention, particularly illustrating a cross-section of the inner part of the second supporting means del device;
- figure 3F illustrates a perspective view of a second preferred implementation of device according to the present invention, in a second configuration of use;
- figure 3G illustrates a perspective view of the second preferred implementation of device according to the present invention, in the second configuration of use, taken on the opposite side with respect to the one of figure 3F;
- figure 3H illustrates a side elevational view of the second preferred implementation of device according to the present invention, in the second configuration of use;
- figures 4A to 4C illustrate in a respective side view a third preferred implementation of device according to the present invention, while it performs a climbing over movement of a product and of gripping of another product;
- figure 4D illustrates a perspective view of the third preferred implementation of device in the gripping position of figure 4C;
- figures 5A to 5F illustrate in a respective side view the third preferred implementation of device according to the present invention, while it performs a gripping movement of a corresponding flat sheet, which is moved above a corresponding plurality of products;
- figure 5G illustrates a perspective view of the third preferred implementation of device in the in the release position of the flat sheet on the plurality of products of the previous figure 5F;
- figures 6A to 6C illustrate in respective side view the third preferred implementation of device according to the present invention, while it performs a gripping movement of a product with a translating movement of the second engaging and holding surface;
- figure 6D illustrates a perspective view of the third preferred implementation of device in the gripping position of figure 6C.

### Detailed description of preferred implementations of the invention

In the attached figures da 1A a 1L, a first preferred implementation 10 of a device for gripping or grasping products is illustrated.

Said products are, in particular, in the form of packages, and in a preferred manner they are defined by a corresponding envelope, for example made of a plastic film, or a paper sheet, or other, or made of cardboard which wraps or contains one or more articles.

In particular, in a preferred and anyhow non-limiting manner, said articles are articles of the so-called Tissue field and preferably are in a paper material or in other material, such as woven fabric or non-woven fabric, preferentially being in the form of rolls, in particular rolls of toilet paper, of kitchen paper or for another use, or rolls for the treatment of food products, such as rolls of aluminium foil, plastic film, wax paper film, and the like.

In particular, furthermore, said articles can be in the form of packaging, in particular packs, packets or other containers, in particular for napkins, handkerchiefs, small towels for hands and face, hand towels, bed sheets, sanitary napkins for personal care and other.

Therefore, the device 10 comprises, as illustrated, means 12 for the support of the means 14 for engaging and holding by suctioning the respective product.

Particularly advantageously, it is provided for that said means 14 for engaging and holding by suctioning the respective product define a first 141 and a second 142 surfaces for engaging and holding by suctioning the same product, in particular angularly spaced apart, preferably angularly spaced by an angle equal to, or substantially equal to, 90°.

In this manner, it is possible to easily and efficiently grasp the product, in particular without providing excessive stresses to the same product, especially to the peripheral surface of the same product, i.e., to the film, or sheet, of the package wrapping respective articles, for example to the film, or sheet, which wraps corresponding toilet paper rolls.

Advantageously, while it is not particularly illustrated in the attached figures, said first and second surfaces 141, 142 for engaging and holding by suctioning the same product are adapted to engage respective faces of the product to be grasped, in particular angularly spaced apart faces, and preferably mutually adjacent, of said product, and preferably faces of said product that are angularly spaced apart by an angle equal to, or substantially equal to, 90°.

In this manner, it is possible to operate in a delicate manner, i.e., without creating excessive stress peaks at the product surface to be grasped produced, and the product can thus be taken without damaging the outer envelope, for example of plastic material, which wraps the respective articles, for example in the form of toilet paper rolls wrapped in a respective packaging plastic film.

In an advantageous manner, while it is not particularly illustrated in the attached figures, said first surface 141 for engaging and holding by suctioning the same product is adapted to engage the upper surface of the product.

With advantage, while it is not particularly illustrated in the attached figures, said first surface 141 for engaging and holding by suctioning the same product is adapted to engage the upper surface of the product at a central, or substantially central, zone thereof.

With particular advantage, while it is not particularly illustrated in the attached figures, the second surface 142 for engaging and holding by suctioning the same product is adapted to engage a side surface of the same product.

In an advantageous manner, while it is not particularly illustrated in the attached figures, said second surface 142 for engaging and holding by suctioning the same product is adapted to engage the side surface of the corresponding product in the proximity of the upper surface of the same product, i.e., of the upper surface of the same side surface of the product.

As is clear from said figures, with advantage, said first surface 141 for engaging and holding by suctioning the same product has a respective longitudinal extension l1 that is greater than the longitudinal extension l2 of said second engaging surface 142.

However, while said longitudinal extension is added with the first engaging surface 141, which is particularly preferred, it shall anyhow be understood that the fact to obtain engaging and holding surfaces 141, 142, which have substantially the same longitudinal extension, or with said second engaging and holding surface 142 having a longitudinal extension larger than that of said first engaging and holding surface 141 is also able to be devised.

As is clear from said figures, with advantage, said first surface 141 for engaging and holding by suctioning the same product has a respective transversal extension t1 that is lesser than the corresponding transversal extension t2 of said second engaging surface 142.

In this manner, in particular, it is possible to exert a greater holding action upon the less-stressed side surface of the product and, ultimately, a good distribution of the withdrawal stresses between the upper part and the side part of the product or package is obtained.

However, while said longitudinal extension is added with the second engaging surface, which is adapted to engage the side face of the product, particularly which is particularly preferred, it shall anyhow be understood that the fact to obtain engaging and holding surfaces of the upper and side faces that have substantially the same transversal extension, or with said second engaging and holding surface of the side surface of the product that has a transversal extension that is less than that of said first engaging and holding surface of the upper face of the product is also able to be devised.

Advantageously, as is clear from said figures, said supporting means 12 define corresponding suctioning chamber means 16 upstream of said first and second surfaces 141, 142 for engaging and holding by suctioning the same product.

With particular advantage, as is clear from said figures, said suctioning chamber means 16 comprise corresponding first and second suctioning chambers 161, 162, respectively upstream of said first and second surfaces 141, 142 for engaging and holding by suctioning the same product.

As is clear from said figures, in an advantageous manner, said supporting means 12 of the device 10 comprise a first and a second supporting bodies 121, 122 respectively for said first and second surfaces 141, 142 for engaging and holding by suctioning the same product.

As is clear from said figures, with advantage, said first and second bodies 121, 122 respectively for supporting said first and second surfaces 141, 142 for engaging and holding by suctioning the same product define a respective suctioning chamber 161 or 162 upstream of the respective surface 141, 142 for engaging and holding by suctioning the same product 141, 142.

With advantage, as is clear from said figures, at the respective surface 141, 142 for engaging and holding by suctioning the same product, corresponding means 18 for the passage of said suctioning flow are provided.

In a further advantageous manner, as is clear from said figures, said means 18 for the passage of said suctioning flow comprise, in particular on the first supporting body 121, a respective large suctioning opening 180 at which a corresponding grid 181, in particular a metal grid, is provided for the passage of a corresponding suctioning air.

Advantageously, as is clear from said figures, the respective surface for engaging and holding the product, in particular said first surface 141 for engaging and holding the product, is defined by a corresponding annular lip 141, in particular having an elongated configuration, preferably defined by a corresponding body 13 of elastic material provided at the front face of the corresponding, or first, supporting body 121 and defining said suctioning opening 180.

Especially, as illustrated, said annular body 13 is secured to the front face of said corresponding, or first, supporting body 121.

As is clear from said figures, with advantage, said body 13 of elastic material at the front face of the corresponding, or first, supporting body 121 is adapted to hold said grid 181 to the same supporting body 121, in particular clamping the edges of the same grid 181 between the rear surface of the same body of elastic material 13 and a corresponding front surface of the corresponding, or first, supporting body 121.

However, it shall be understood that also means that are different from the means 180, 181 and 13 illustrated above could be anyhow devised. For example, the grid 181 and said peripheral body 13 could be replaced with any other porous material, such as a corresponding spongy material, preferably provided with corresponding through holes of said suctioning flow.

In an advantageous manner, as is clear from said figures, the respective surface for engaging and holding by suctioning the same product, in particular said second surface 142 for engaging and holding by suctioning the same product, is defined by the front surface of a pad 182, preferably made of elastic material, at the front face of the corresponding, or second, supporting body 122.

With particular advantage, as is clear from said figures, said means 18 for the passage of said suctioning flow comprise, in particular on the second supporting body 122, a plurality of passages 183, in particular evenly distributed, for a corresponding suctioning flow, in particular provided at the outer surface of a pad 182, preferably made of elastic material, in particular said pad 182 defining said surface 142 for engaging and holding by suctioning a corresponding face, in particular the side face, of the product, i.e., the second surface 142 for engaging and holding by suctioning provided on the second supporting body 122 of the same device 10.

However, it shall be understood that said second engaging surface could also be produced in a different manner with respect to said pad 182. In particular, in accordance with a further embodiment, said engaging surface 142 could also be defined by a plurality of, for example two, pads, perhaps respectively having through holes with a diameter that is different from one another.

Advantageously, as is clear from said figures, said means 14 for engaging by suctioning the respective product, i.e., the respective surface 141, 142 for engaging and holding by suctioning the same product, have, or has, means 20 for sealing the contact with the opposite face of the product to be grasped.

In an advantageous manner, as is clear from said figures, said means 20 for sealing the contact with the opposite surface of the product comprise said annular lip 141, in particular having an elongated configuration, preferably defined by a corresponding body 13 of elastic material defining the respective product engaging and holding surface, in particular said first surface 141 for engaging and holding the product.

With advantage, as is clear from said figures, said means 20 for sealing the contact with the opposite surface of the product comprise a peripheral portion 184, of a pad 182, preferably made of elastic material, defining respective surface for engaging and holding by suctioning the same product, in particular said second surface 142 for engaging and holding by suctioning thereof.

In an advantageous manner, as is clear from said figures, said supporting means 12 comprise corresponding means 20 for the connection to means, not illustrated in particular in the attached figures, for generating a suctioning flow, in particular corresponding conduits of the suctioning circuit.

In an advantageous manner, as is clear from said figures, said means 18 for the connection to means for generating a suctioning flow, in particular corresponding conduits of the suctioning circuit comprise corresponding tubular portions 201, 202 projecting from said supporting means 12 and in connection with the respective first and second suctioning chambers 161, 162 respectively upstream of said first and second surfaces 141, 142 for engaging and holding by suctioning the same product.

With particular advantage, as is clear from said figures, a first and a second projecting tubular portions 181, 182 defining said means 18 for the connection to means for generating a suctioning flow are provided, which respectively extend from said first and from said second supporting bodies121, 122, in particular from the first supporting body 121 superiorly and towards the rear part of the device and posteriorly upwards from the second supporting body 122.

In particular, said suctioning tubular portions 181, 182 are positioned in connection with a common suctioning circuit, and adjusting means can be provided, for suitably differentiate the suction flow rate between the same suctioning tubular portions 181, 182, i.e., the same suctioning tubular portions 181, 182 can be each connected to a respective and different suctioning device, in particular so as to obtain suction flow rates that are suitably different from one another.

Furthermore, said projecting tubular portions 181, 182 may also have, unlike what has been illustrated, diameters that are suitably different from one another.

With advantage, as is clear from said figures, said supporting means 12 comprise connecting means 123 between said first and second supporting bodies 121, 122 respectively of said first and second surfaces 141, 142 for engaging and holding by suctioning the same product.

In an advantageous manner, as is clear from said figures, said connecting means 123 between said first and second supporting bodies 121, 122 respectively of said first and second surfaces 141, 142 for engaging and holding by suctioning the same product are in the form of a corresponding bracket, in particular a metal grid, 123, which is interposed between said first and second supporting bodies 121, 122.

Advantageously, as is clear from said figures, said connecting means, or bracket, 123 between said first and second supporting bodies 121, 122 have a respective longitudinal portion 1231 and a respective perpendicular portion, in particular oblique, 1232 respectively, for supporting said first and second supporting bodies 121, 122, i.e., consequently, respectively, for said first and second surfaces 141, 142 for engaging and holding by suctioning the same product.

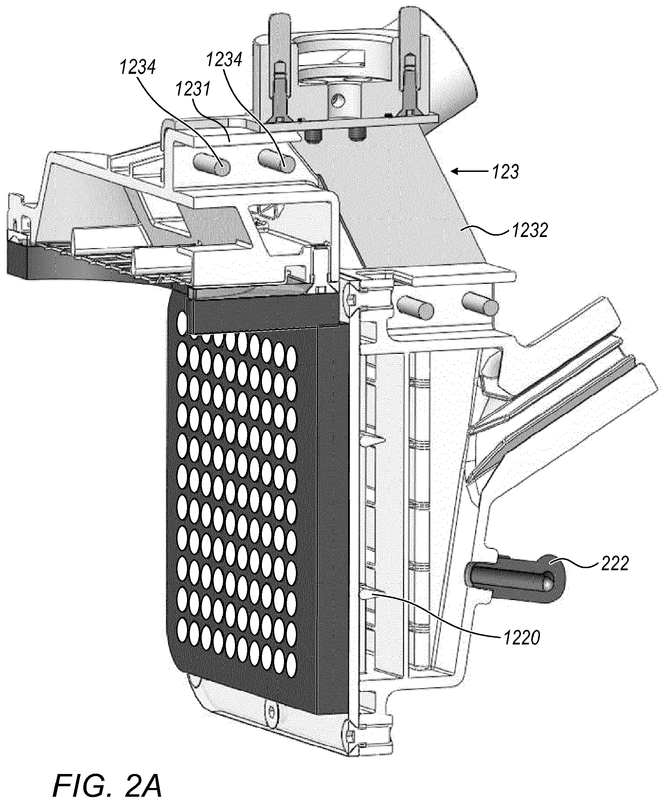

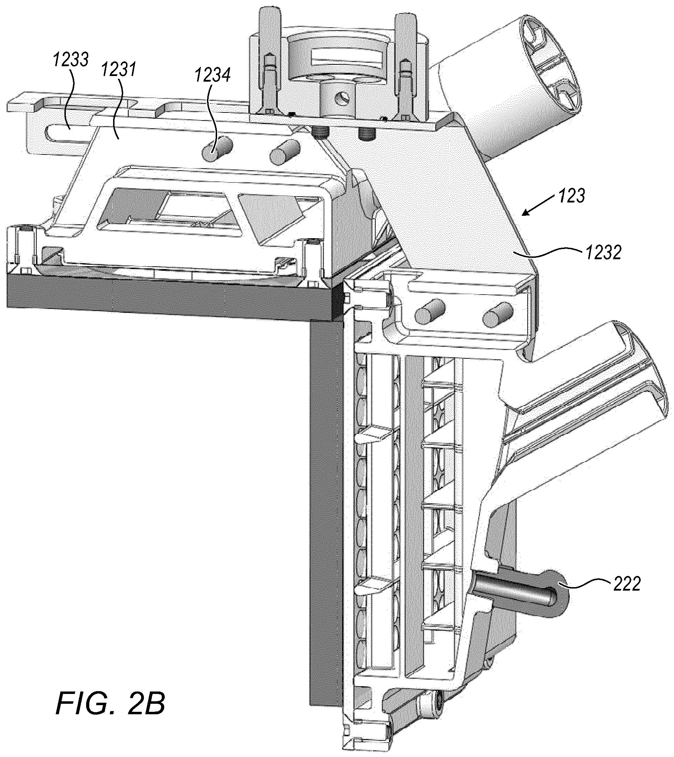

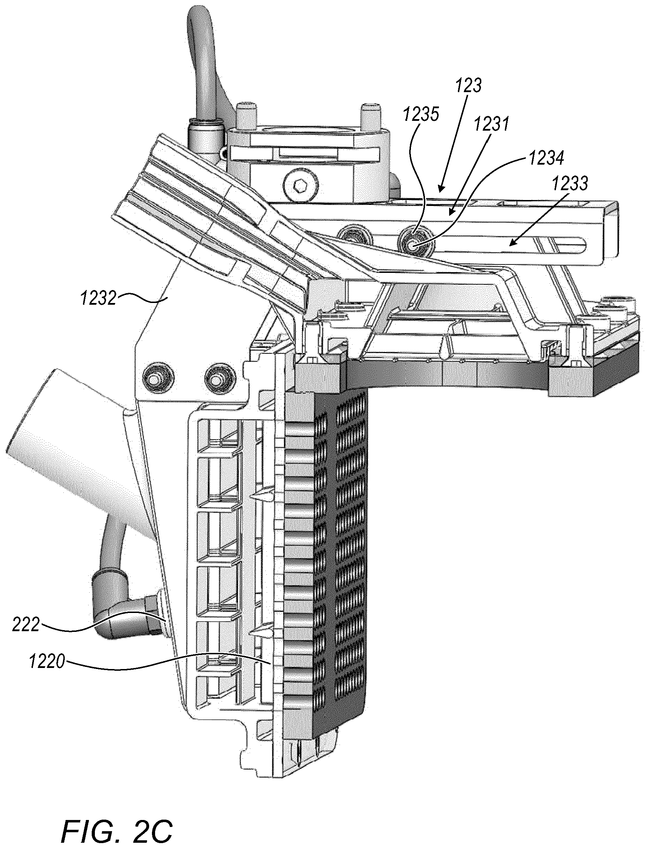

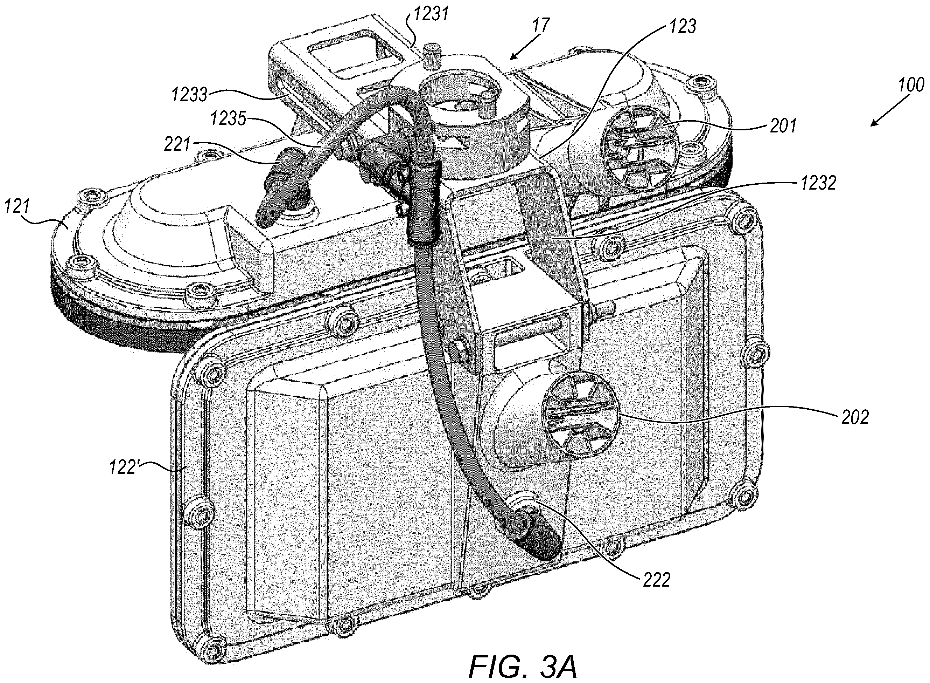

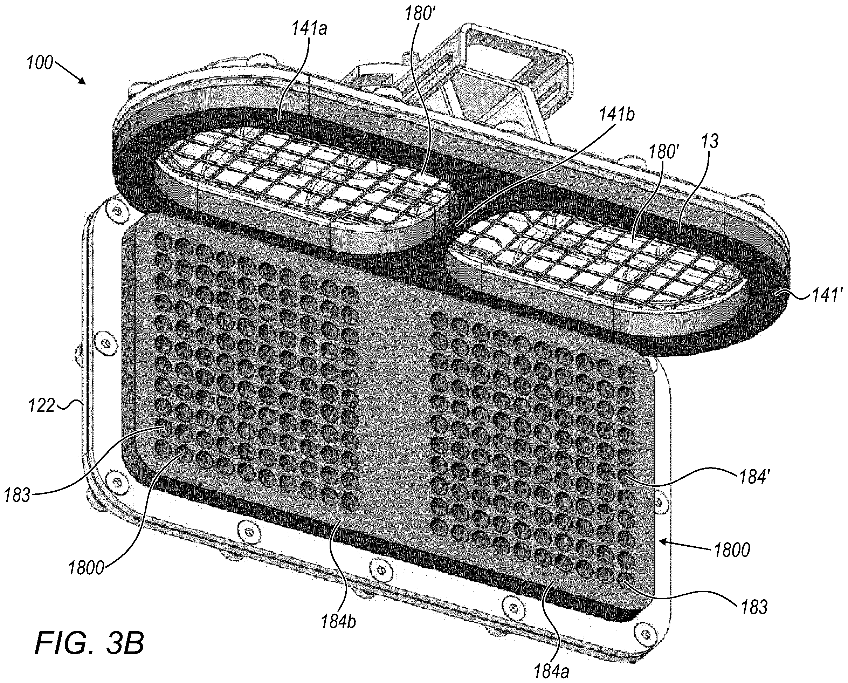

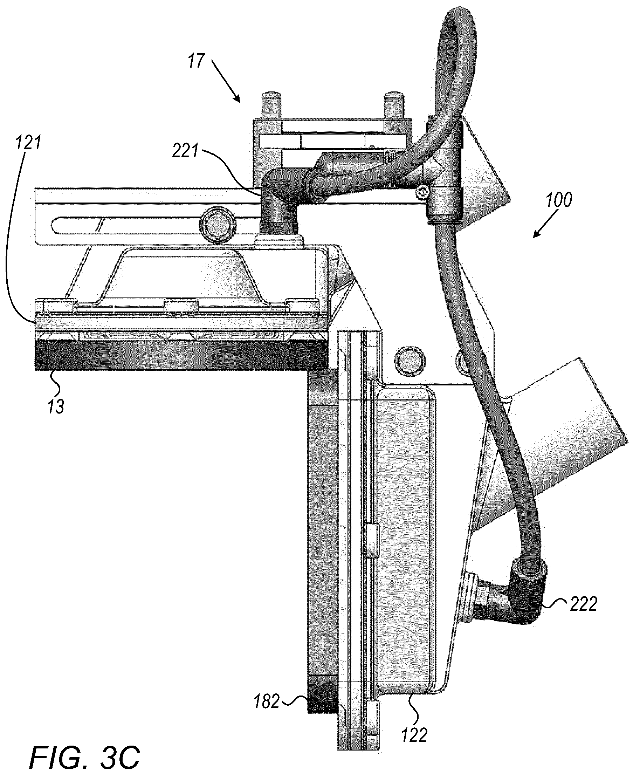

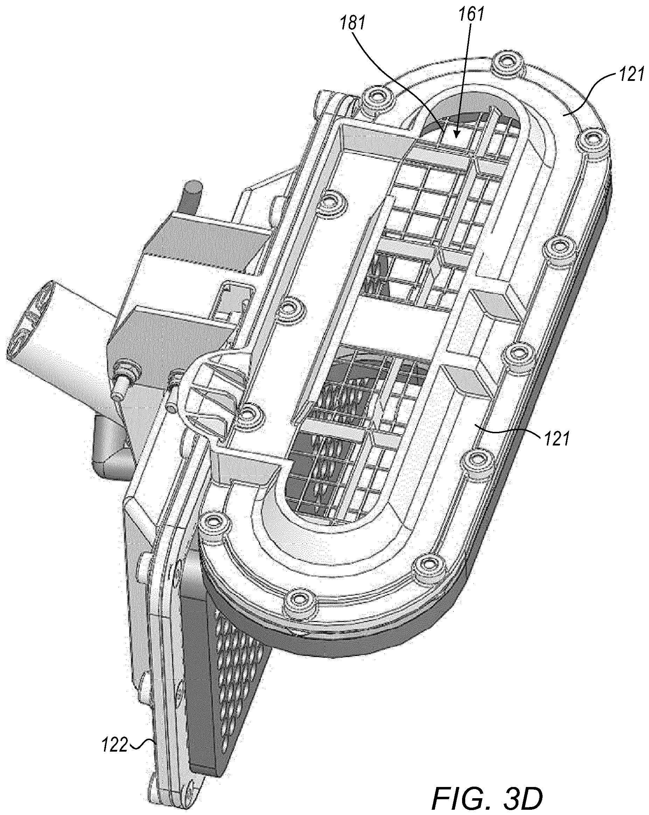

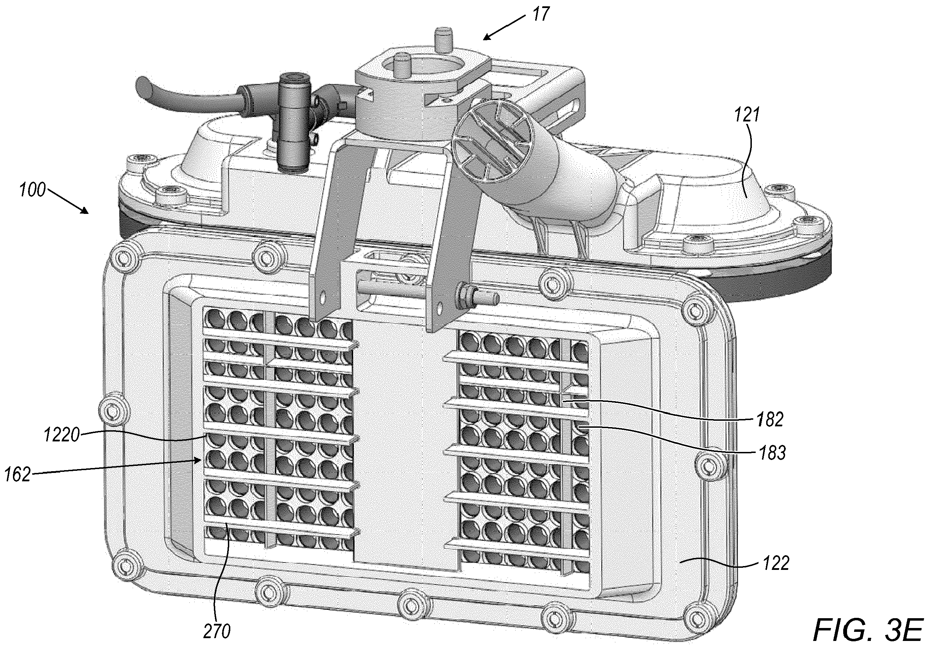

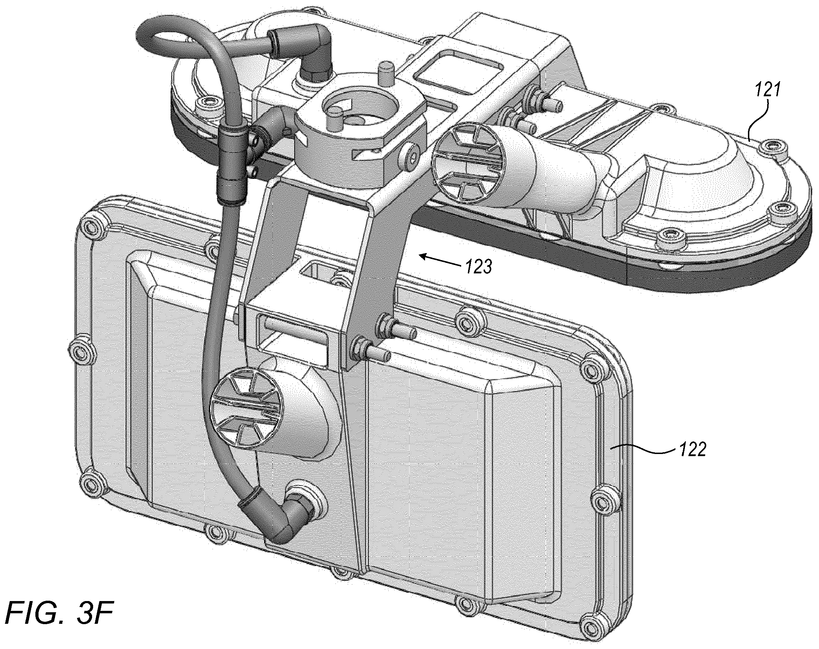

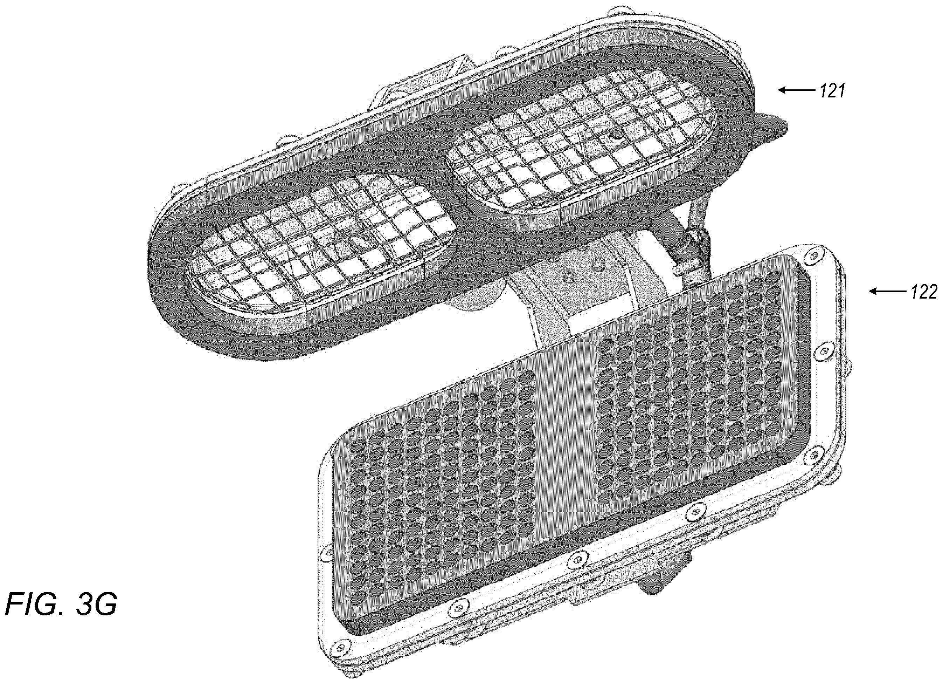

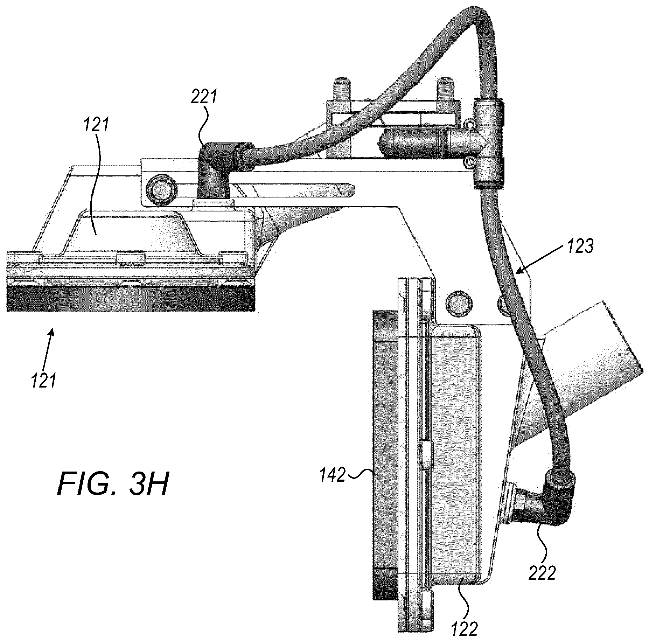

Advantageously, as is clear from the following figures 2A to 2C, regarding a second version of the first preferred implementation of device, and from figures 3A to 3H regarding a second preferred implementation 100 of device, which will be anyhow best understood from the following of the present description, means 1233 for adjusting the relative position between said first and second supporting bodies 121, 122 are provided, in particular the perpendicular relative position between said first and second supporting bodies 121, 122.

In this manner, it is possible to adjust the device to different types or product sizes.

In an advantageous manner, as is clear from said figures, said means 1233 for adjusting the relative position between said first and second supporting bodies 121, 122, in particular the perpendicular relative position between said first and second supporting bodies 121, 122, are provided on said connecting means, or bracket, 123 between said first and second supporting bodies 121, 122.

With advantage, as is clear from said figures, said means 1233 for adjusting the relative position between said first and second supporting bodies 121, 122, in particular the perpendicular relative position between said first and second supporting bodies 121, 122, comprise, in particular on said longitudinal portion 1231 of said connecting means, or bracket, 123 between said first and second supporting bodies 121, 122, respective elongated-slot means 1233 for the sliding of corresponding pins 1234 for supporting the corresponding, or first, body 121 of the respective surface 141 for engaging and holding by suctioning the product, which supporting pins 1234 can be blocked in the corresponding, preferably perpendicular, position, especially through corresponding tightening screws 1235.

Although means for adjusting the perpendicular relative position between said first and second holding means 141, 142 have been illustrated, it can anyhow be devised to be able to adjust the relative position of the same said first and second holding means 141, 142 according to any other desired direction, for example, according to a direction that is longitudinal thereto.

With particular advantage, as is clear from said figures, attachment means 17 are provided, in particular for a rapid attachment to means for moving said device 10, in particular defined by the arm of a corresponding robot.

In an advantageous manner, said attachment means 17, in particular for a rapid attachment to means for moving said device 10, in particular defined by the arm of a corresponding robot, are provided on said connecting means 123 between said first and second supporting bodies 121, 122 define, and in particular extend superiorly from the same connecting means, or bracket, 123 between said first and second supporting bodies 121, 122.

Particularly advantageously, as is clear from said figures, means 22 for releasing the product from the device are provided.

With advantage, as is clear from said figures, said means for releasing the product from the device comprise means 221, 222 for ejecting a compressed air flow at the respective surface 141, 142 for engaging and holding by suctioning the same product, in particular at said first and second surfaces 141, 142 for engaging and holding by suctioning the same product.

In an advantageous manner, as is clear from said figures, said means for releasing the product from the device comprise respective first and second conduits 221, 222 for ejecting a compressed air flow in connection with said first and second suctioning chambers 161, 162 respectively upstream of said first and second surfaces 141, 142 for engaging and holding by suctioning the same product, and in particular provided at the respective first and second supporting bodies 121, 122 of the device 10.

It shall anyhow be understood that said first and second conduits 221, 122 for ejecting a compressed air flow can be supplied by a single circuit with optional means for adjusting the flow rate, in order to suitably differentiate the release action respectively on the first and on the second engaging and holding means 141, 142, i.e., they could also be supplied by circuits generating a compressed air flow that are mutually different and independent, in particular in order to be able to suitably differentiate the release action respectively on the first and on the second engaging and holding means 141, 142.

Advantageously, as is clear from said figures, the respective supporting body 122, in particular said second supporting body 122 of the device 10, has means 1220 for a rear support of the respective pad 182, preferably of elastic material, defining said surface 142 for engaging and holding by suctioning the product.

With particular advantage, as is clear from said figures, said rear supporting means of the respective pad 182, preferably of elastic material, defining said surface 142 for engaging and holding by suctioning the product, comprise a plurality of transversal ribs 1220, defining anteriorly the corresponding suctioning chamber 162, and spaced apart one from the other to define a suitable passage for the suctioning flow of the product.

In an advantageous manner, as is clear from said figures, said means 14 for engaging by suctioning the respective product, in particular the surface 141, 142 for engaging and holding by suctioning the same product, i.e., the respective supporting body 121, 122, have, or has, an elongated, in particular longitudinally elongated shape.

With advantage, as is clear from said figures, in particular with regard to the first preferred implementation of device, said means 14 for engaging by suctioning the respective product, in particular the respective surface 142 for engaging and holding by suctioning the same product have, i.e., the respective supporting body 121, 122, have, or has, a substantially or generally quadrangular shape, in particular squared, or rectangular, as provided in the second preferred implementation of device, which will be best understood from the following of the present description.

In the following figures 3A to 3H, a second preferred implementation 100 of device according to the present invention is illustrated, the components of which that are similar, or equivalent, to those of the previous preferred implementation are marked with the same reference numerals and, in order not to excessively burden the present description, are not commented in detail again.

The present second preferred implementation 100 of device is distinguished from the first preferred implementation of device in that the respective surface for engaging and holding the product, in particular said first surface 141 for engaging and holding the product, is defined by a corresponding shaped lip 141', in particular having an elongated configuration, preferably defined by a corresponding body 13 of elastic material provided at the front face of the corresponding, or first, supporting body 121 and defining a first and a second suctioning openings 180', 180', longitudinally mutually aligned.

Said shaped lip 141', in particular having an elongated configuration, preferably defined by a corresponding body 13 of elastic material provided at the front face of the corresponding, or first, supporting body 121 and defining said suctioning openings 180', 180', substantially comprises an outer elongated portion, in particular having a generally elliptical shape, 141a and an intermediate portion 141b for the connection between opposite longitudinal sides of said outer elongated portion 141a, and in particular extending at the median zones of the same longitudinal sides.

In this manner, it is possible to obtain a firmer and/or tighter grip of the product on the respective engaging side.

Furthermore, the present second preferred implementation 100 of device is distinguished from the first preferred implementation of device in that the respective engaging and holding surface, in particular said second surface 142 for engaging and holding by suctioning the same product, is defined by the front surface of a pad 182, preferably made of elastic material, at the front face of the corresponding, or second, supporting body 122, which defines, with a respective shaped body 184 means for sealing the contact with the opposite surface of the product which define a first and a second suctioning zones 1800, 1800, in particular longitudinally mutually aligned, and in which corresponding through or passage holes 183 are provided.

In particular said shaped lip 184 is defined by a peripheral portion 188a, from the intermediate zone of which of the opposite ling sides a corresponding transversal portion 184b extends, which divides, in said engaging pad 182, said first and second suctioning zones1800, 1800.

In this manner, it is possible to obtain a firmer and/or tighter grip of the product on the respective engaging side.

Furthermore, as is clear from said first and second preferred implementation, the respective surface 141 for engaging and holding by suctioning the same product has a generally elliptical configuration, in particular having a profile composed of parallel longitudinal lengths 1401, 1401, joined to one another at the opposite longitudinal ends through corresponding semi-circular, or substantially semi-circular, lengths, 140c, 140c.

In this manner, it is possible to advantageously engage products, in particular respective packages of rolls, that have a similar configuration of the respective face, in particular of the upper face thereof.

However, it shall be understood that the configuration of the respective engaging and holding surface can be any, in particular, besides being elongated, it can be quadrangular, rectangular or elliptical, even having a circular shape, or another shape.

In an advantageous manner, said supporting means 12, i.e., said first and second supporting bodies 121, 122, are of plastic material, preferably obtained through a tridimensional printer.

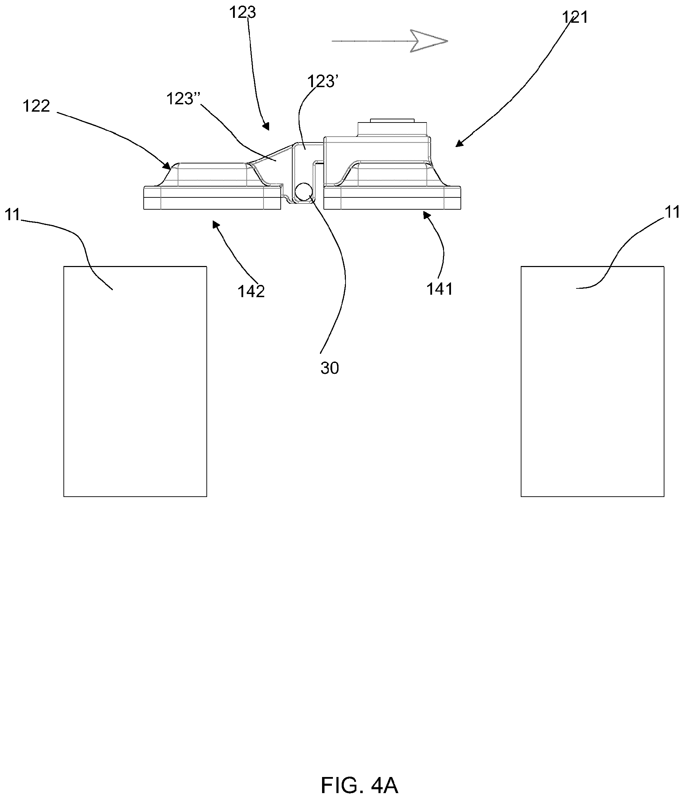

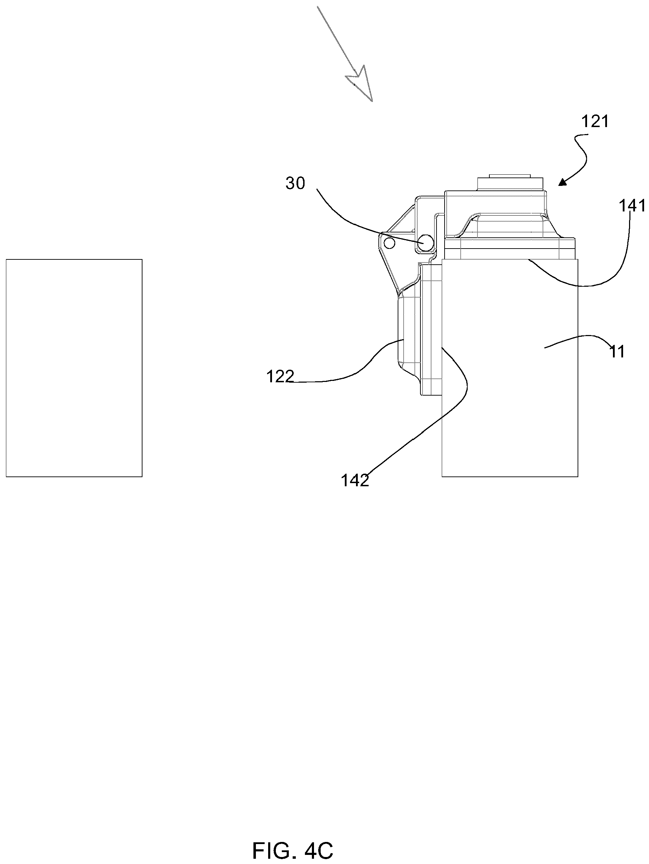

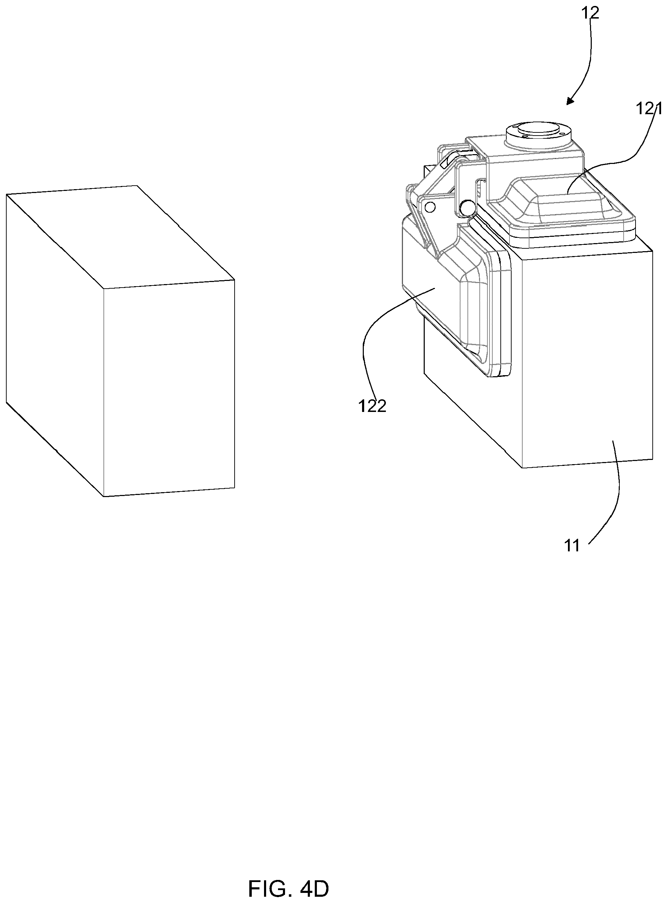

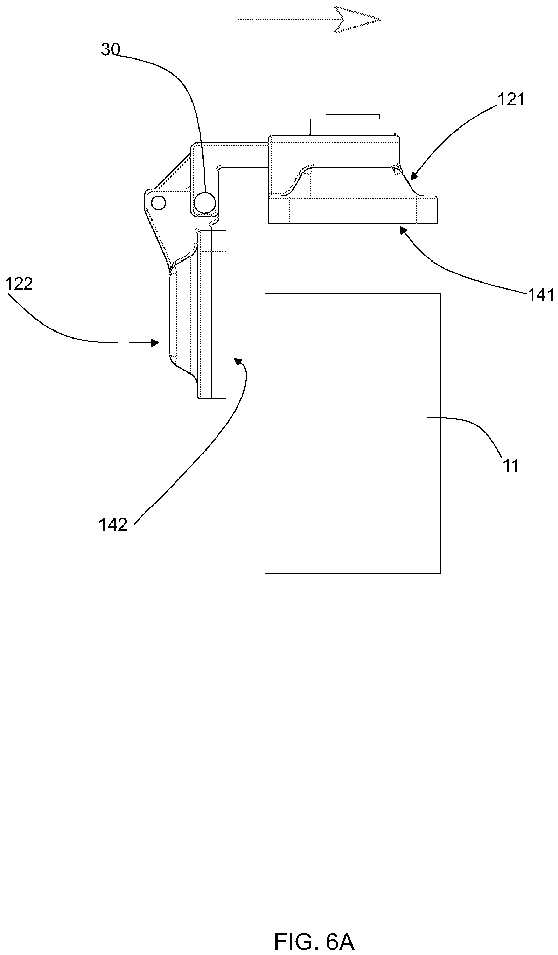

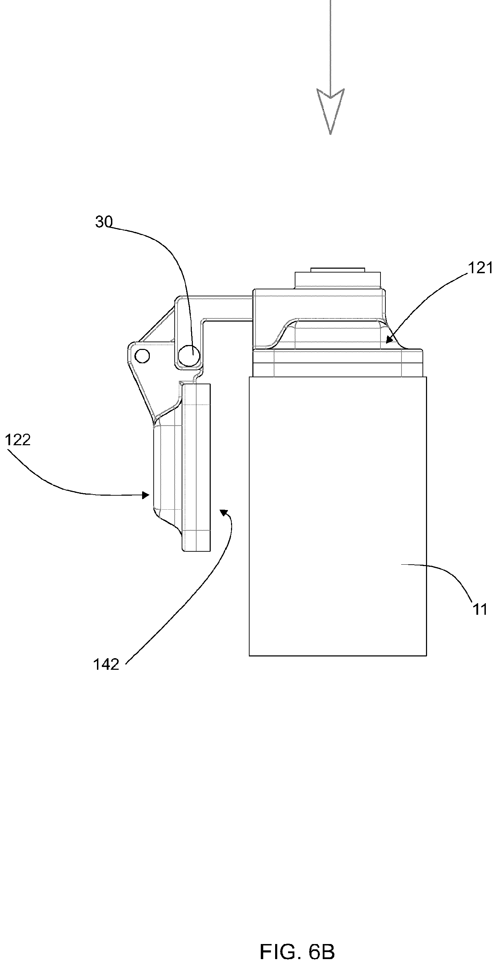

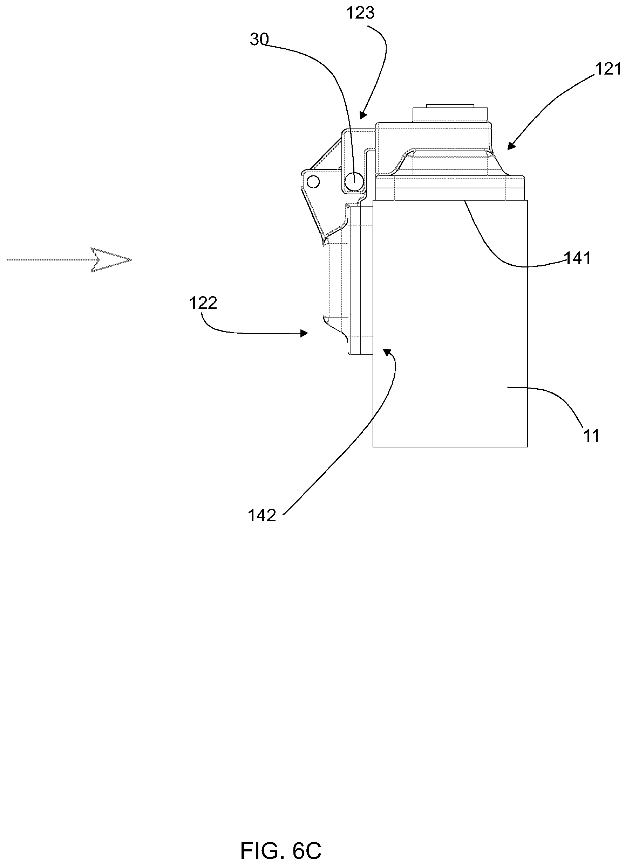

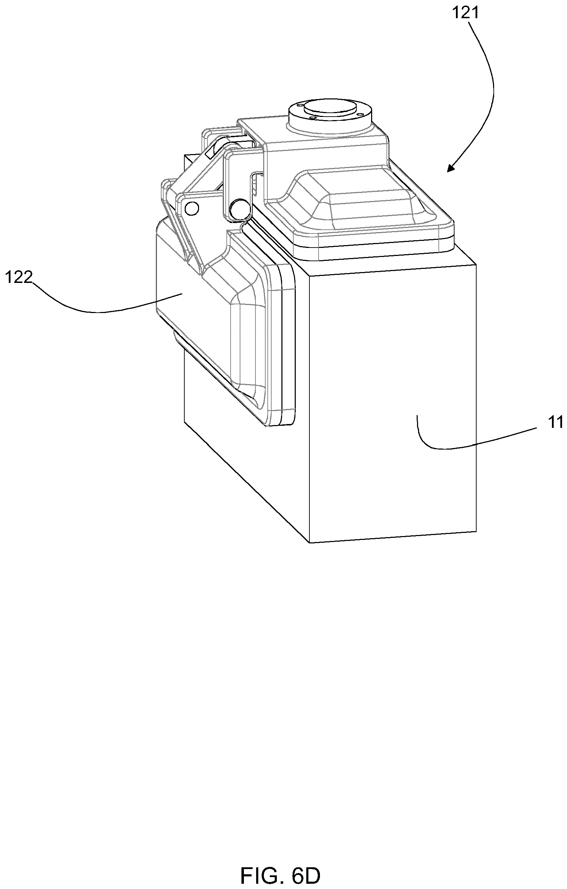

In the following figures 4A to 6D, a third preferred implementation of device is illustrated, which third implementation has components that are similar or equivalent to those of the previous preferred implementations, which are marked by the same numeral references that were used in the previous preferred implementations and which, in order not to excessively burden the present description, are not commented in detail again.

Advantageously, as is clear from said figures 4A to 6D, in this third preferred implementation of device, means 14 for engaging and holding by suctioning the respective product 11 are provided, which define a first 141 and a second 142 surfaces for engaging and holding by suctioning the same product, which are movable one with respect to the other one.

With advantage, therefore, as is clear from said figures 4A to 6D, a first and a second supporting bodies 121, 122 are provided, respectively for supporting for said first and second surfaces 141, 142 for engaging and holding by suctioning the same product, which are movable one with respect to the other one.

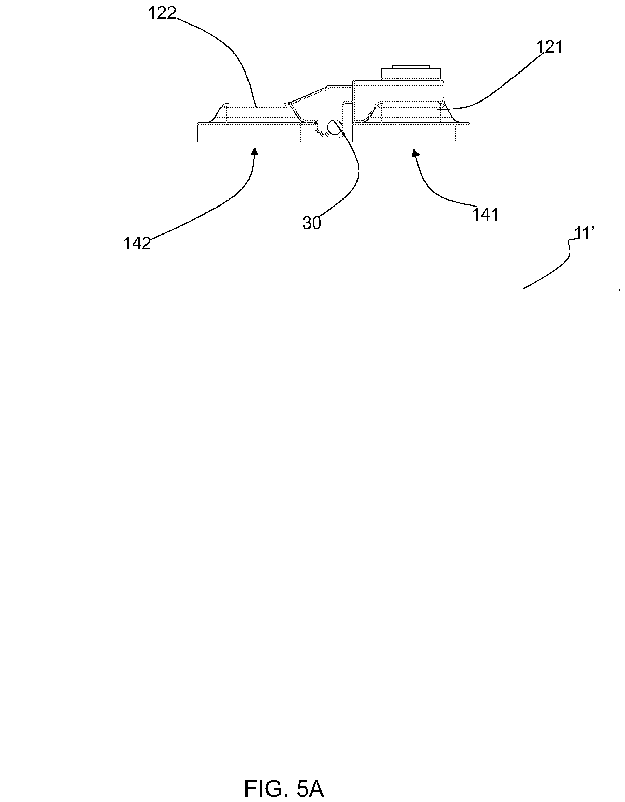

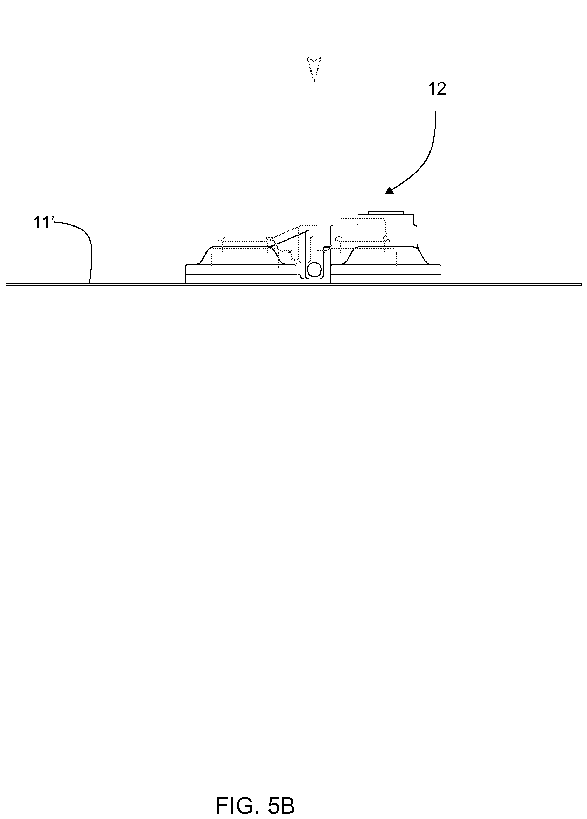

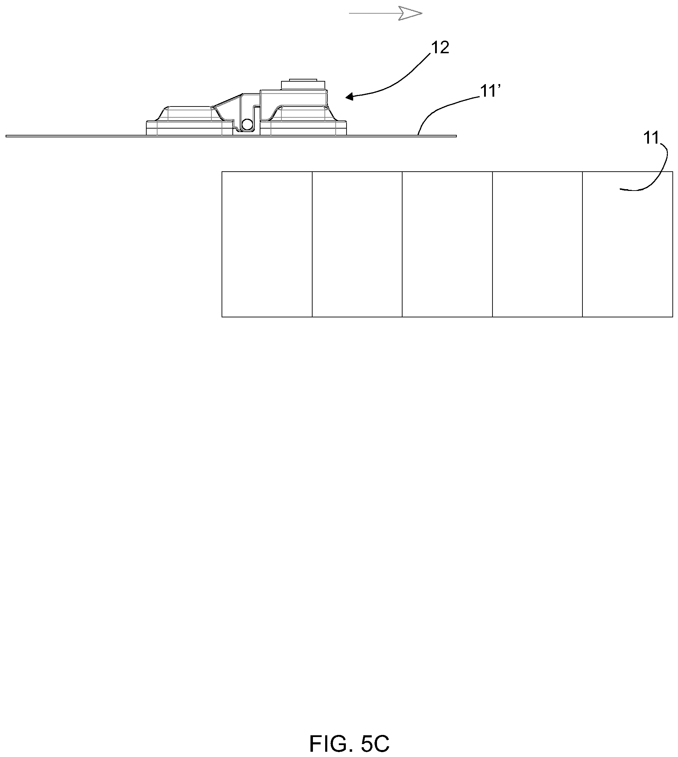

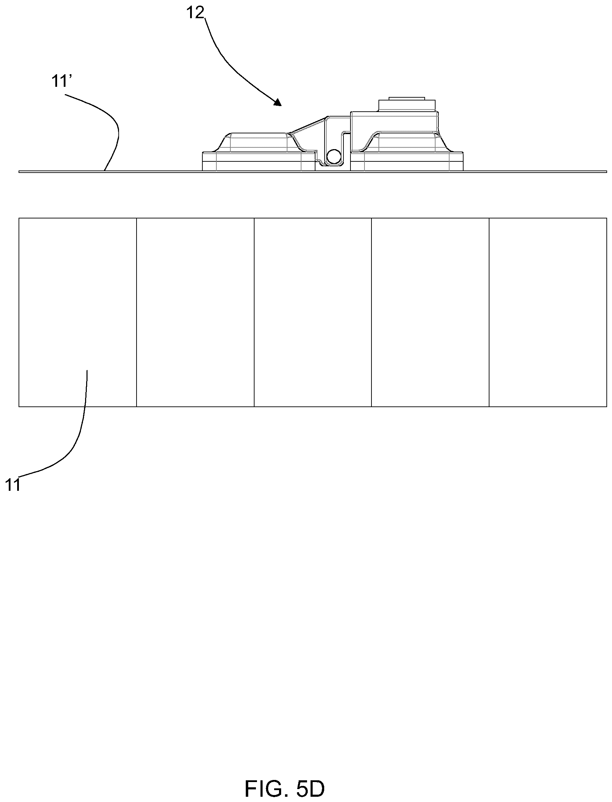

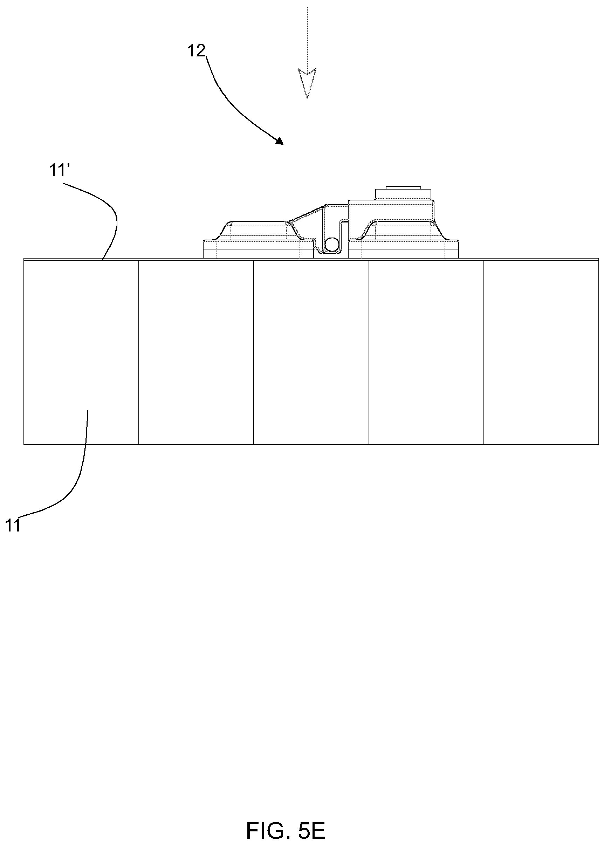

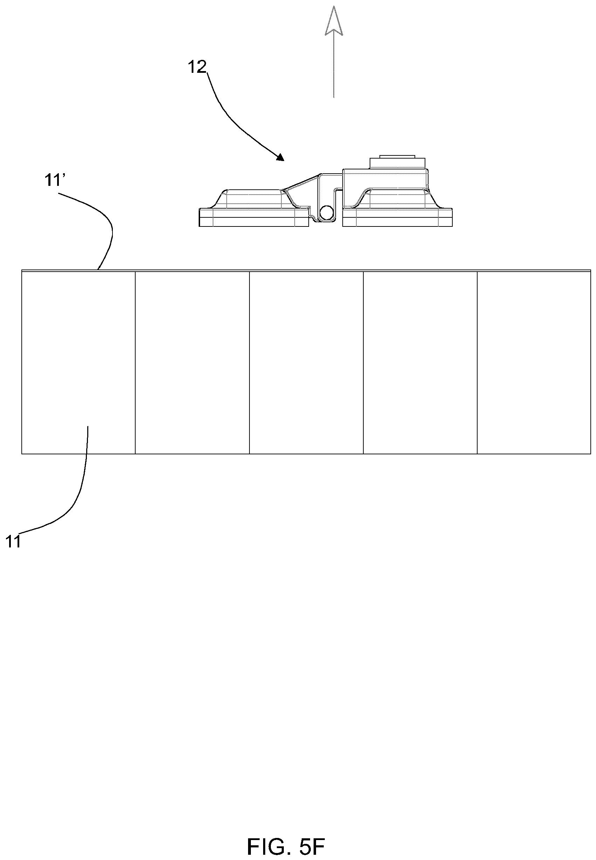

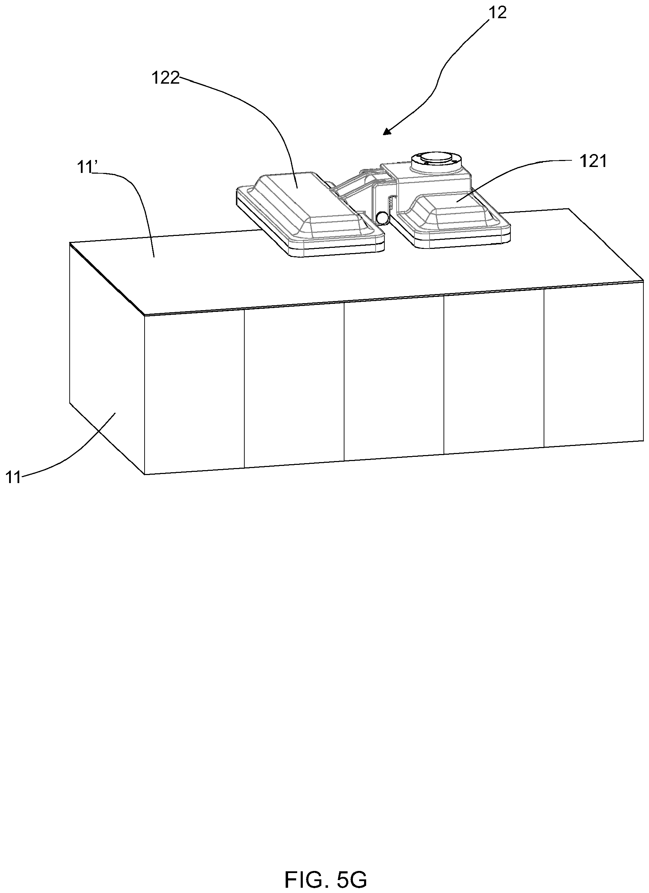

With advantage, said first 141 and second 142 surfaces for engaging and holding by suctioning the same product are movable one with respect to the other one in a position, in particular a resting or lifted position, for example illustrated in said figures 4A, and 5A to 5G, in which they are aligned or substantially mutually aligned.

Advantageously, as is clear from said figures 4A to 6D, said first and second supporting bodies 121, 122 respectively for said first and second surfaces 141, 142 for engaging and holding by suctioning the same product are movable one with respect to the other one in a position, in particular a resting or lifted position, in which they are aligned or substantially mutually aligned.

Advantageously, as is clear from said figures 4A to 6D, said second surface 142 for engaging and holding by suctioning the same product 11 is movable with respect to the first surface 141 for engaging and holding by suctioning the same product 11 in a position, in particular a resting or lifted position, in which said first 141 and second 142 surfaces for engaging and holding by suctioning the same product are aligned or substantially mutually aligned.

As is clear from said figures 4A to 6D, in an advantageous manner, said second supporting body 122, for said second surface 141, 142 for engaging and holding by suctioning the same product 11, is movable with respect to said first supporting body 121, for said first surface 141 for engaging and holding by suctioning the same product 11, in a position, in particular a resting or lifted position, in which said first and second supporting bodies 121, 122 are aligned or substantially mutually aligned.

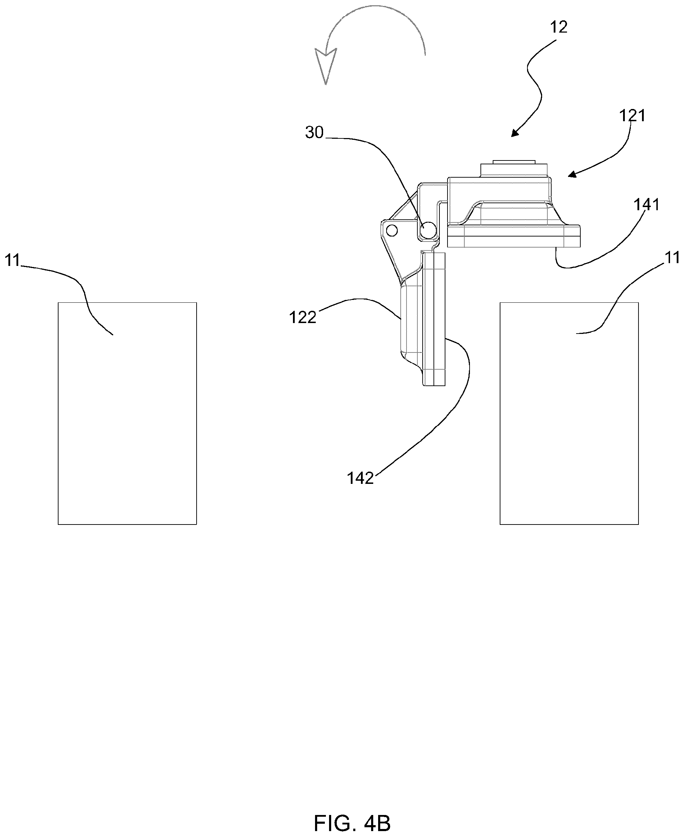

In an advantageous manner, said first 141 and second 142 surfaces for engaging and holding by suctioning the same product 11 are movable with respect to one another in a position, in particular an engaging position of the product 11, in which they are angularly spaced apart, in particular by 90°, or substantially by 90°, in particular well illustrated in said figures 4B to 4D and 6A to 6D.

Advantageously, as is clear from said figures 4B to 4D and 6A to 6D, said first and second supporting bodies 121, 122 respectively for said first and second surfaces 141, 142 for engaging and holding by suctioning the same product are movable one with respect to the other one, in a position, in particular an engaging position of the product 11, in which they are angularly spaced apart from one another, in particular by 90°, or substantially by 90°.

As is clear from said figures 4A to 6D, particularly advantageously, said second surface 142 for engaging and holding by suctioning the same product 11 is movable with respect to the first surface 141 for engaging and holding by suctioning the same product 11 in a position, in particular an engaging position of the product 11, in which they are angularly spaced apart, in particular by 90°, or substantially by 90°.

Advantageously, as is clear from said figures 4A to 6D, said second supporting body 122, for said second surface 141, 142 for engaging and holding by suctioning the same product 11, is movable with respect to said first supporting body 121, for said first surface 141 for engaging and holding by suctioning the same product 11, in a position, in particular an engaging position of the product 11, in which they are angularly spaced apart from one another, in particular by 90°, or substantially by 90°.

Particularly advantageously, as is most clear from figure 4B, means 30 for a relative rotation between a first 141 and a second 142 surfaces for engaging and holding by suctioning the same product 11 are provided, in particular according to a respective angular direction, especially by an angle equal to, or substantially equal to, 90°, especially between a position in which said first 141 and second 142 surfaces for engaging and holding by suctioning the same product 11 are aligned or substantially mutually aligned, and a position in which said first 141 and second 142 surfaces for engaging and holding by suctioning the same product 11 are angularly spaced apart, in particular by 90°, or substantially by 90°.

As is clear as is most clear from said figure 4B, with advantage, means 30 for a relative rotation of the second surface 142 for engaging and holding by suctioning the same product 11 are provided, with respect to the surface 141 for engaging and holding by suctioning the same product 11, in particular according to a respective angular direction, especially by an angle equal to, or substantially equal to, 90°, especially between a position in which said first 141 and second 142 surfaces for engaging and holding by suctioning the same product 11 are aligned or substantially mutually aligned, and a position in which said first 141 and second 142 surfaces for engaging and holding by suctioning the same product 11 are angularly spaced apart, in particular by 90°, or substantially by 90°.

Advantageously, as is most clear from figure 4B, means 30 for a rotation between a first and a second supporting bodies 121, 122 respectively for said first and second surfaces 141, 142 for engaging and holding by suctioning the same product are provided, in particular according to a respective angular direction, in particular by an angle equal to, or substantially equal to, 90°, especially between a position in which said first 141 and second 142 surfaces for engaging and holding by suctioning the same product 11 are aligned or substantially mutually aligned, and a position in which said first 141 and second 142 surfaces for engaging and holding by suctioning the same product 11 are angularly spaced apart, in particular by 90°, or substantially by 90°.

Advantageously, as is clear from said figures 4A to 6D, means 30 for a rotation of said second supporting body 122 are provided, for said second surface 141, 142 for engaging and holding by suctioning the same product 11, is movable with respect to said first supporting body 121, for said first surface 141 for engaging and holding by suctioning the same product 11, in particular according to a respective angular direction, in particular by an angle equal to, or substantially equal to, 90°, especially between a position in which said first 141 and second 142 surfaces for engaging and holding by suctioning the same product 11 are aligned or substantially mutually aligned, and a position in which said first 141 and second 142 surfaces for engaging and holding by suctioning the same product 11 are angularly spaced apart, in particular by 90°, or substantially by 90°.

As is clear from said figures 4A to 6D, in an advantageous manner, said rotation between said first 141 and second 142 surfaces for engaging and holding by suctioning the same product, and/or between said first and second supporting bodies 121, 122 respectively for said first and second surfaces 141, 142 for engaging and holding by suctioning the same product said first 141 and second 142 surfaces for engaging and holding by suctioning the same product, occurs according to a respective horizontal axis.

With advantage, as is clear from said figures 4A to 6D, said rotation between said first 141 and second 142 surfaces for engaging and holding by suctioning the same product, and/or between said first and second supporting bodies 121, 122 respectively for said first and second surfaces 141, 142 for engaging and holding by suctioning the same product said first 141 and second 142 surfaces for engaging and holding by suctioning the same product, occurs according to an axis parallel to the adjacent sides of said first 141 and second 142 surfaces for engaging and holding by suctioning the same product, and/or said first and second supporting bodies 121, 122 respectively for said first and second surfaces 141, 142 for engaging and holding by suctioning the same product.

Advantageously, as is clear from said figures 4A to 6D, said rotation means 30 are provided for between said first 141 and said second 142 surfaces for engaging and holding by suctioning the same product, and/or between said first and said secondo supporting bodies 121, 122 respectively for said first and second surfaces 141, 142 for engaging and holding by suctioning the same product, are in the form of, or defined by, a corresponding rotation hinge 30.

As is clear from said figures 4A to 6D, particularly advantageously, said rotation means, or respective hinge, 30 are at the connecting means 123 between said first and second supporting bodies 121, 122 respectively of said first and second surfaces 141, 142 for engaging and holding by suctioning the same product.

Advantageously, as is clear from said figures 4A to 6D, said rotation means, or respective hinge, 30 are provided for between a first part 123' of said connecting means 123 between said first and second supporting bodies 121, 122, which is integral to, and/or projecting from, said first supporting body 121, and a second part 123" of said connecting means 123 between said first and second supporting bodies 121, 122, which is integral to, and/or projecting from, said second supporting body 121, 122.

In an advantageous manner, as is clear from said figures 4A to 6D, said rotation means, or respective hinge, 30 are adapted to arrange said first 141 and second 142 surfaces for engaging and holding by suctioning the same product on the same plane, in particular a horizontal plane, i.e., in a mutually aligned condition.

As is clear from said figures 4A to 6D, with advantage, said rotation means, or respective hinge, 30 are adapted to arrange said first 141 and second 142 surfaces for engaging and holding by suctioning the same product on planes that are angularly spaced apart from one another, in particular on planes that are angularly spaced apart from one another by 90°.

Advantageously, as is clear from said figures 4A to 6D, said rotation means, or respective hinge, 30 are in a position above said first surface 141 for engaging and holding by suctioning the same product and/or said second surface 142 for engaging and holding by suctioning the same product, in particular in a mutually aligned condition.

As is clear from said figures 4A to 6D, particularly advantageously, said second surface 142 for engaging and holding by suctioning the same product 11, and/or the corresponding supporting body 121, in the position, in particular for engaging the product 11, in which it is angularly rotated, in particular by 90°, or substantially by 90°, extends inferiorly with respect to said first surface 142 for engaging and holding by suctioning the same product 11, and/or with respect to the corresponding supporting body 121, in particular corresponding, or substantially corresponding, to the arrangement of the preferred implementation above.

In this manner, by virtue of the present possibility to rotate, the device can thus be configurated in a completely lifted position, which allows a movement of the device such as to avoid respective products 11 and at a height level that is advantageous or substantially corresponding to that for gripping the respective product 11, as is clear from figures 4A to 4D, i.e., which allows taking flat product or articles, for example cardboard sheets 11' to be used to create stacks of products 11, as is clear from said figures 5A to 5G.

Advantageously, as is clear from said figures 6A to 6D, said first 141 and second 142 surfaces for engaging and holding by suctioning the same product are movable one with respect to the other one with a translating movement, in particular parallel to the other surface 141 for engaging and holding by suctioning the same product; in particular said second surface 142 for engaging and holding by suctioning the same product, or vertically positioned surface, is movable parallel to the first engaging and holding surface 141, or horizontally positioned surface.

As is clear from said figures 6A to 6D, in an advantageous manner, said first and second supporting bodies 121, 122 respectively for said first and second surfaces 141, 142 for engaging and holding by suctioning the same product are movable one with respect to the other with a translating movement, in particular parallel to the surface 141 for engaging and holding by suctioning the same product, of the other supporting body 121. In particular said second supporting body 122 of said second surface 142 for engaging and holding by suctioning the same product, or vertically positioned surface, is movable parallel to the first engaging and holding surface 141, or horizontally positioned surface, i.e., parallel to said first supporting body 121 of said first surface 141 for engaging and holding by suctioning the same product 11.

Particularly advantageously, as is clear from said figures 6A to 6D, means for the actuation of the relative translating movement between said first 141 and second 142 surfaces for engaging and holding by suctioning the same product are provided, i.e., between said first and second supporting bodies 121, 122 respectively for said first and second surfaces 141, 142 for engaging and holding by suctioning the same product.

Particularly advantageously, as is clear from said figures 6A to 6D said first 141 and second 142 surfaces for engaging and holding by suctioning the same product, and/or said first and second supporting bodies 121, 122 respectively for said first and second surfaces 141, 142 for engaging and holding by suctioning the same product, are respectively movable with a translating movement, forwards and backwards, between a respective mutually moved-farther position and a respective moved-closer position, in particular for gripping the product 11.

Advantageously, as is clear from said figures 6A to 6D, said means for the actuation of the relative translating movement between said first 141 and second 142 surfaces for engaging and holding by suctioning the same product, i.e., between said first and second supporting bodies 121, 122 respectively for said first and second surfaces 141, 142 for engaging and holding by suctioning the same product, are adapted to move said connecting means 123 between said first and second supporting bodies 121, 122 respectively for said first and second surfaces 141, 142 for engaging and holding by suctioning the same product, with respect to said first supporting body 121.

In particular, as illustrated in the figures 6A to 6D, said connecting means 123 between said first and second supporting bodies 121, 122 respectively for said first and second surfaces 141, 142 for engaging and holding by suctioning the same product, move longitudinally with respect to said first supporting body 121, in particular entering again and extending into, or with respect, thereto.

For example, this translating movement could be provided by corresponding pneumatic means, in particular a pneumatic cylinder, i.e., of the electromechanic type, which move said connecting means 123 between said first and second supporting bodies 121, 122 respectively for said first and second surfaces 141, 142 for engaging and holding by suctioning the same product.

In this manner, it is possible to hold the product firm with the upper engaging and holding surface 141 and subsequently contact it with the lower or side engaging and holding surface 142. This type of grip is particularly advantageous, for example, when the product to be grasped has a limited weight, as occurs for products or packs in the tissue field. In practice, said upper engaging and holding surface 141 easily engages the product, having the contrast of the opposite lower surface onto which it rests, and it is thus possible to contact the same product laterally by the lower or side engaging and holding surface 142, without the risk to move in an undesired manner the same product.

In practice, as is clear, the technical characteristics illustrated above allow, singularly or in a respective combination to achieve one or more of the following advantageous results:
- it is possible to easily grasp the product, in particular without providing excessive stresses to the same product, especially to the peripheral surface of the same product, i.e., to the film, or sheet, of the package wrapping respective articles, for example to the film, or sheet, which wraps corresponding toilet paper rolls;
- it is possible to operate in a delicate manner, i.e., without creating excessive stress peaks at the surface of the product to be grasped produced, and the product can thus be taken without damaging the outer envelope, for example of plastic material, which wraps the respective articles, for example in the form of toilet paper rolls wrapped in a respective packaging plastic film;
- it is possible to exert a greater holding action upon the less-stressed side surface of the product;
- it is possible to exert a movement of the device such as to avoid respective products and at a height level substantially corresponding to the grasping level of the respective product;
- it is possible to take flat products or articles, for example cardboard sheets to be used to create stacks of products;
- it is possible to un movement of the device such as to avoid respective products and at a height level that is advantageous or substantially corresponding to the grasping level of the respective product;
- it is possible to take flat products or articles, for example cardboard sheets to be used to create stacks of products;
- it is further possible to easily grasp products that have a limited weight, as occurs for the products or packs of the tissue field.

The present invention is susceptible of a clear industrial application. Those skilled in the art will be able to devise a number of modifications and/or variations to be made to the same invention, while remaining within the scope of the innovative concept, as broadly set forth. Furthermore, those skilled in the art will be able to devise further preferred implementations of the invention that comprise one or more of the characteristics illustrated above of the preferred implementation. Furthermore, it is also understood that all the details of the invention can be replaced by technically equivalent elements.

## Claims

1. A device (10) for gripping or grasping products, said products being in particular in the form of packages, in a preferred manner defined by a corresponding envelope, for example made of a plastic film, or a paper sheet, or other, or made of cardboard, which wraps or contains one or more articles; in particular said articles being articles of the so-called Tissue field and preferably being made of paper material or other material, such as woven fabric or non-woven fabric, and preferentially being in the form of rolls, in particular rolls of toilet paper, of kitchen paper or for another use, or rolls for the treatment of food products, such as rolls of aluminium foil, plastic film, wax paper film, and the like, i.e., said articles being in the form of packaging, in particular packs, packets or other containers, in particular for napkins, handkerchiefs, small towels for hands and face, hand towels, bed sheets, sanitary napkins for personal care; the device comprising support means (12) for means (14) for engaging and holding by suctioning the respective product and being **characterized in that** said means (14) for engaging and holding by suctioning the respective product that define a first (141) and a second (142) surfaces for engaging and holding by suctioning the same product (11), which are movable one with respect to the other one.

2. The device according to claim 1 or according to the pre-characterizing part of claim 1, **characterized in that** a first and a second supporting bodies (121, 122), respectively, are provided for said first and second surfaces (141, 142) for engaging and holding by suctioning the same product (11) which are movable one with respect to the other one.

3. The device according to any of the preceding claims, **characterized in that** said first (141) and second (142) surfaces for engaging and holding by suctioning the same product (11) are movable one with respect to the other one in a position, in particular a resting or lifted position, in which they are aligned or substantially mutually aligned.

4. The device according to any of the preceding claims, **characterized in that** said first and second supporting bodies (121, 122) respectively for said first and second surfaces (141, 142) for engaging and holding by suctioning the same product (11) are movable one with respect to the other one in a position, in particular a resting or lifted position, in which they are aligned or substantially mutually aligned.

5. The device according to any of the preceding claims, **characterized in that** said second surface (142) for engaging and holding by suctioning the same product (11) is movable with respect to the first surface (141) for engaging and holding by suctioning the same product (11) in a position, in particular a resting or lifted position, in which said first (141) and second (142) surfaces for engaging and holding by suctioning the same product are aligned or substantially mutually aligned.

6. The device according to any of the preceding claims, **characterized in that** said second supporting body (122), for said second surface (141, 142) for engaging and holding by suctioning the same product (11), is movable with respect to said first supporting body (121), for said first surface (141) for engaging and holding by suctioning the same product (11), in a position, in particular a resting or lifted position, in which said first and second supporting bodies (121, 122) are aligned or substantially mutually aligned.

7. The device according to any of the preceding claims, **characterized in that** said first (141) and second (142) surfaces for engaging and holding by suctioning the same product (11) are movable with respect to one another in a position, in particular an engaging position of the product (11), in which they are angularly spaced apart, in particular by 90°, or substantially by 90°.

8. The device according to any of the preceding claims, **characterized in that** said first and second supporting bodies (121, 122) respectively for said first and second surfaces (141, 142) for engaging and holding by suctioning the same product are movable one with respect to the other one, in a position, in particular an engaging position of the product (11), in which they are angularly spaced apart from one another, in particular by 90°, or substantially by 90°.

9. The device according to any of the preceding claims, **characterized in that** said second surface (142) for engaging and holding by suctioning the same product (11) is movable with respect to the first surface (141) for engaging and holding by suctioning the same product (11) in a position, in particular an engaging position of the product (11), in which they are angularly spaced apart, in particular by 90°, or substantially by 90°.

10. The device according to any of the preceding claims, **characterized in that** said second supporting body (122), for said second surface (141, 142) for engaging and holding by suctioning the same product (11), is movable with respect to said first supporting body (121), for said first surface (141) for engaging and holding by suctioning the same product (11), in a position, in particular an engaging position of the product (11), in which they are angularly spaced apart from one another, in particular by 90°, or substantially by 90°.

11. The device according to any of the preceding claims, **characterized in that** means (30) for a relative rotation between a first (141) and a second (142) surfaces for engaging and holding by suctioning the same product (11) are provided, in particular according to a respective angular direction, especially by an angle equal to, or substantially equal to, 90°, especially between a position in which said first (141) and second (142) surfaces for engaging and holding by suctioning the same product (11) are aligned or substantially mutually aligned, and a position in which said first (141) and second (142) surfaces for engaging and holding by suctioning the same product (11) are angularly spaced apart, in particular by 90°, or substantially by 90°.

12. The device according to any of the preceding claims, **characterized in that** means (30) for a relative rotation of the second surface (142) for engaging and holding by suctioning the same product (11) are provided, with respect to the surface (141) for engaging and holding by suctioning the same product (11), in particular according to a respective angular direction, especially by an angle equal to, or substantially equal to, 90°, especially between a position in which said first (141) and second (142) surfaces for engaging and holding by suctioning the same product (11) are aligned or substantially mutually aligned, and a position in which said first (141) and second (142) surfaces for engaging and holding by suctioning the same product (11) are angularly spaced apart, in particular by 90°, or substantially by 90°.

13. The device according to any of the preceding claims, **characterized in that** means (30) for a rotation between a first and a second supporting bodies (121, 122) respectively for said first and second surfaces (141, 142) for engaging and holding by suctioning the same product are provided, in particular according to a respective angular direction, in particular by an angle equal to, or substantially equal to, 90°, especially between a position in which said first (141) and second (142) surfaces for engaging and holding by suctioning the same product (11) are aligned or substantially mutually aligned, and a position in which said first (141) and second (142) surfaces for engaging and holding by suctioning the same product (11) are angularly spaced apart, in particular by 90°, or substantially by 90°.

14. The device according to any of the preceding claims, **characterized in that** means (30) for a rotation of said second supporting body (122) are provided, for said second surface (141, 142) for engaging and holding by suctioning the same product (11), is movable with respect to said first supporting body (121), for said first surface (141) for engaging and holding by suctioning the same product (11), in particular according to a respective angular direction, in particular by an angle equal to, or substantially equal to, 90°, especially between a position in which said first (141) and second (142) surfaces for engaging and holding by suctioning the same product (11) are aligned or substantially mutually aligned, and a position in which said first (141) and second (142) surfaces for engaging and holding by suctioning the same product (11) are angularly spaced apart, in particular by 90°, or substantially by 90°.

15. The device according to any of the preceding claims, **characterized in that** said rotation between said first (141) and second (142) surfaces for engaging and holding by suctioning the same product, and/or between said first and second supporting bodies (121, 122) respectively for said first and second surfaces (141, 142) for engaging and holding by suctioning the same product said first (141) and second (142) surfaces for engaging and holding by suctioning the same product, is according to a respective horizontal axis.

16. The device according to any of the preceding claims, **characterized in that** said rotation between said first (141) and second (142) surfaces for engaging and holding by suctioning the same product, and/or between said first and second supporting bodies (121, 122) respectively for said first and second surfaces (141, 142) for engaging and holding by suctioning the same product said first (141) and second (142) surfaces for engaging and holding by suctioning the same product, is according to an axis parallel to the adjacent sides of said first (141) and second (142) surfaces for engaging and holding by suctioning the same product, and/or said first and second supporting bodies (121, 122) respectively for said first and second surfaces (141, 142) for engaging and holding by suctioning the same product.

17. The device according to any of the preceding claims, **characterized in that** said rotation means (30) are provided for between said first (141) and said second (142) surfaces for engaging and holding by suctioning the same product, and/or between said first and said second supporting bodies (121, 122) respectively for said first and second surfaces (141, 142) for engaging and holding by suctioning the same product, are in the form of, or defined by, a corresponding rotation hinge (30).

18. The device according to any of the preceding claims, **characterized in that** said rotation means, or respective hinge, (30) are at the connecting means (123) between said first and second supporting bodies (121, 122) respectively of said first and second surfaces (141, 142) for engaging and holding by suctioning the same product.

19. The device according to any of the preceding claims, **characterized in that** said rotation means, or respective hinge, (30) are provided for between a first part (123') of said connecting means (123) between said first and second supporting bodies (121, 122), which is integral to, and/or projecting from, said first supporting body (121), and a second part (123") of said connecting means (123) between said first and second supporting bodies (121, 122), which is integral to, and/or projecting from, said second supporting body (121, 122).

20. The device according to any of the preceding claims, **characterized in that** said rotation means, or respective hinge, (30) are adapted to arrange said first (141) and second (142) surfaces for engaging and holding by suctioning the same product on the same plane, in particular a horizontal plane, i.e., in a mutually aligned condition.

21. The device according to any of the preceding claims, **characterized in that** said rotation means, or respective hinge, (30) are adapted to arrange said first (141) and second (142) surfaces for engaging and holding by suctioning the same product on planes that are angularly spaced apart from one another, in particular on planes that are angularly spaced apart from one another by 90°.

22. The device according to any of the preceding claims, **characterized in that** said rotation means, or respective hinge, (30) are in a position above said first surface (141) for engaging and holding by suctioning the same product and/or said second surface (142) for engaging and holding by suctioning the same product, in particular in a mutually aligned condition.

23. The device according to any of the preceding claims, **characterized in that** said second surface (142) for engaging and holding by suctioning the same product (11), and/or the corresponding supporting body (121), in the position, in particular for engaging the product (11), in which it is angularly rotated, in particular by 90°, or substantially by 90°, extends inferiorly with respect to said first surface (142) for engaging and holding by suctioning the same product (11), and/or with respect to the corresponding supporting body (121).

24. The device according to any of the preceding claims or according to the pre-characterizing part of claim 1, **characterized in that** said first (141) and second (142) surfaces for engaging and holding by suctioning the same product are movable one with respect to the other one with a translating movement, in particular parallel to the other surface (141) for engaging and holding by suctioning the same product; in particular said second surface (142) for engaging and holding by suctioning the same product, or vertically positioned surface, is movable parallel to the first engaging and holding surface (141), or horizontally positioned surface.

25. The device according to any of the preceding claims or according to the pre-characterizing part of claim 1, **characterized in that** said first and second supporting bodies (121, 122) respectively for said first and second surfaces (141, 142) for engaging and holding by suctioning the same product are movable one with respect to the other with a translating movement, in particular parallel to the surface (141) for engaging and holding by suctioning the same product, of the other supporting body (121), in particular said second supporting body (122) of said second surface (142) for engaging and holding by suctioning the same product, or vertically positioned surface, is movable parallel to the first engaging and holding surface (141), or horizontally positioned surface, i.e., parallel to said first supporting body (121) of said first surface (141) for engaging and holding by suctioning the same product.

26. The device according to any of the preceding claims 24 and 25, **characterized in that** said first (141) and second (142) surfaces for engaging and holding by suctioning the same product, and/or said first and second supporting bodies (121, 122) respectively for said first and second surfaces (141, 142) for engaging and holding by suctioning the same product, are respectively movable with a translating movement, forwards and backwards, between a respective mutually moved-farther position and a respective moved-closer position, in particular for gripping the product (11).

27. The device according to any of the preceding claims 24 to 26, **characterized in that** means for the actuation of the relative translating movement between said first (141) and second (142) surfaces for engaging and holding by suctioning the same product are provided, i.e., between said first and second supporting bodies (121, 122) respectively for said first and second surfaces (141, 142) for engaging and holding by suctioning the same product.

28. The device according to claim 27, **characterized in that** said means for the actuation of the relative translating movement between said first (141) and second (142) surfaces for engaging and holding by suctioning the same product, i.e., between said first and second supporting bodies (121, 122) respectively for said first and second surfaces (141, 142) for engaging and holding by suctioning the same product, are adapted to move said connecting means (123) between said first and second supporting bodies (121, 122) respectively for said first and second surfaces (141, 142) for engaging and holding by suctioning the same product, with respect to said first supporting body (121).

29. The device according to any of the preceding claims or according to the pre-characterizing part of claim 1, **characterized in that** said means (14) for engaging and holding by suctioning the respective product define a first (141) and a second (142) surfaces for engaging and holding by suctioning the same product, in particular angularly spaced apart, preferably angularly spaced by an angle equal to, or substantially equal to, 90°.

30. The device according to claim 29, **characterized in that** said first and second surfaces (141, 142) for engaging and holding by suctioning the same product are adapted to engage respective faces of the product to be grasped, in particular angularly spaced apart faces, and preferably mutually adjacent, of said product, and preferably faces of said product that are angularly spaced apart by an angle equal to, or substantially equal to, 90°.

31. The device according to any of the preceding claims 29 and 30, **characterized in that** said first surface (141) for engaging and holding by suctioning the same product is adapted to engage the upper surface of the product.

32. The device according to claim 31, **characterized in that** said first surface (141) for engaging and holding by suctioning the same product is adapted to engage the upper surface of the product at a central, or substantially central, zone thereof.

33. The device according to any of the preceding claims da 29 a 32, **characterized in that** said second surface (142) for engaging and holding by suctioning the same product is adapted to engage a side surface of the same product.

34. The device according to claim 33, **characterized in that** said second surface (142) for engaging and holding by suctioning the same product is adapted to engage the side surface of the corresponding product in the proximity of the upper surface of the same product.

35. The device according to any of the preceding claims da 29 a 34, **characterized in that** said first surface (141) for engaging and holding by suctioning the same product has a respective longitudinal extension (11) that is greater than the longitudinal extension (12) of said second engaging surface (142).

36. The device according to any of the preceding claims da 29 a 35, **characterized in that** said first surface (141) for engaging and holding by suctioning the same product has a respective transversal extension (t1) that is lesser than the corresponding transversal extension (t2) of said second engaging surface (142).

37. The device according to any of the preceding claims da 29 a 36, **characterized in that** said supporting means (12) define corresponding suctioning chamber means (16) upstream of said first and second surfaces (141, 142) for engaging and holding by suctioning the same product.

38. The device according to claim 37, **characterized in that** said suctioning chamber means (16) comprise corresponding first and second suctioning chambers (161, 162) respectively upstream of said first and second surfaces (141, 142) for engaging and holding by suctioning the same product.

39. The device according to any of the preceding claims da 29 a 38, **characterized in that** said supporting means (12) of the device (10) comprise a first and a second supporting bodies (121, 122) respectively for said first and second surfaces (141, 142) for engaging and holding by suctioning the same product.

40. The device according to claim 39, **characterized in that** said first and second bodies (121, 122) respectively for supporting said first and second surfaces (141, 142) for engaging and holding by suctioning the same product define a respective suctioning chamber (161 or 162) upstream of the respective surface (141, 142) for engaging and holding by suctioning the same product (141, 142).

41. The device according to any of the preceding claims or according to the pre-characterizing part of claim 1, **characterized in that** at the respective surface (141, 142) for engaging and holding by suctioning the same product, corresponding means (18) are provided for the passage of said suctioning flow.

42. The device according to claim 41, **characterized in that** said means (18) for the passage of said suctioning flow comprise, in particular on the first supporting body (121), a respective large suctioning opening (180), i.e., a first and a second suctioning openings (180', 180'), preferably longitudinal, mutually aligned, in particular at which opening a corresponding grid (181), in particular a metal grid, is provided for the passage of a corresponding suctioning air.

43. The device according to any of the preceding claims or according to the pre-characterizing part of claim 1, **characterized in that** the respective product engaging and holding surface, in particular said first surface (141) for engaging and holding the product, is defined by a corresponding annular lip (141), in particular having an elongated configuration, preferably defined by a corresponding body (13) of elastic material provided at the front face of the corresponding, or first, supporting body (121) and defining the respective suctioning opening (180); especially said annular body (13) being secured to the front face of said corresponding, or first, supporting body (121).

44. The device according to claim 43, **characterized in that** said body (13) of elastic material at the front face of the corresponding, or first, supporting body (121) is adapted to hold said grid (181) to the same supporting body (121), in particular clamping the edges of the same grid (181) between the rear surface of the same body of elastic material (13) and a corresponding front surface of the corresponding, or first, supporting body (121).

45. The device according to any of the preceding claims or according to the pre-characterizing part of claim 1, **characterized in that** the respective surface for engaging and holding by suctioning the same product, in particular said second surface (142) for engaging and holding by suctioning the same product is defined by the front surface of a pad (182), preferably made of elastic material, at the front face of the corresponding, or second, supporting body (122).

46. The device according to any of the preceding claims 41 to 45, **characterized in that** said means (18) for the passage of said suctioning flow comprise, in particular on the second supporting body (122), a plurality of passages (183), in particular evenly distributed, for a corresponding suctioning flow, in particular provided at the outer surface of a pad (182), preferably made of elastic material, in particular said pad (182) defining said surface (142) for engaging and holding by suctioning a corresponding face, in particular the side face, of the product, i.e., the second surface (142) for engaging and holding by suctioning provided on the second supporting body (122) of the same device (10).

47. The device according to any of the preceding claims or according to the pre-characterizing part of claim 1, **characterized in that** said means (14) for engaging by suctioning the respective product, i.e., the respective surface (141, 142) for engaging and holding by suctioning the same product, have, or has, means (20) for sealing the contact with the opposite face of the product to be grasped.

48. The device according to claim 47, **characterized in that** said means (20) for sealing the contact with the opposite surface of the product comprise an annular or shaped lip (141, 141'), in particular having an elongated configuration, preferably defined by a corresponding body (13) of elastic material defining the respective product engaging and holding surface, in particular said first surface (141) for engaging and holding the product.

49. The device according to claim 48, **characterized in that** said means (20) for sealing the contact with the opposite surface of the product comprise a peripheral or shaped portion (184), of a pad (182), preferably of elastic material, defining respective surface for engaging and holding by suctioning the same product, in particular said second surface (142) for engaging and holding by suctioning thereof.

50. The device according to any of the preceding claims or according to the pre-characterizing part of claim 1, **characterized in that** said supporting means (12) comprise corresponding means (20) for the connection to means for generating a suctioning flow, in particular corresponding conduits of the suctioning circuit.

51. The device according to claim 50, **characterized in that** said means (18) for the connection to means for generating a suctioning flow, in particular corresponding conduits of the suctioning circuit comprise corresponding tubular portions (201, 202) projecting from said supporting means (12) and in connection with the respective first and second suctioning chambers (161, 162) respectively upstream of said first and second surfaces (141, 142) for engaging and holding by suctioning the same product.

52. The device according to any of the preceding claims 50 and 51, **characterized in that** a first and a second projecting tubular portions (181, 182) are provided, defining said means (18) for the connection to means for generating a suctioning flow, which extend from said first and from said second supporting bodies (121, 122), respectively.

53. The device according to any of the preceding claims da 29 a 52, **characterized in that** said supporting means (12) comprise connecting means (123) between said first and second supporting bodies (121, 122) respectively of said first and second surfaces (141, 142) for engaging and holding by suctioning the same product.

54. The device according to claim 53, **characterized in that** said connecting means (123) between said first and second supporting bodies respectively of said first and second surfaces (141, 142) for engaging and holding by suctioning the same product are in the form of a corresponding bracket, in particular a metal bracket, (123), which is interposed between said first and second supporting bodies (121, 122).

55. The device according to any of the preceding claims da 29 a 54, **characterized in that** said connecting means, or bracket, (123) between said first and second supporting bodies (121, 122) have a respective longitudinal portion (1231) and a perpendicular portion, in particular oblique, (1232) respectively, for supporting said first and second supporting bodies (121, 122), i.e., consequently, respectively, for said first and second surfaces (141, 142) for engaging and holding by suctioning the same product.

56. The device according to any of the preceding claims da 29 a 55, **characterized in that** means (1233) are provided, for adjusting the relative position between said first and second supporting bodies (121, 122), in particular the perpendicular relative position between said first and second supporting bodies (121, 122).

57. The device according to claim 56, **characterized in that** said means (1233) for adjusting the relative position between said first and second supporting bodies (121, 122), in particular the perpendicular relative position between said first and second supporting bodies (121, 122), are provided on said connecting means, or bracket, (123) between said first and second supporting bodies (121, 122).

58. The device according to any of the preceding claims 56 e 57, **characterized in that** said means (1233) for adjusting the relative position between said first and second supporting bodies (121, 122), in particular the perpendicular relative position between said first and second supporting bodies (121, 122), comprise, in particular on said perpendicular portion (1231) of said connecting means, or bracket, (123) between said first and second supporting bodies (121, 122), respective elongated-slot means (1233) for the sliding of corresponding pins (1234) for supporting the corresponding, or first, body (121) of the respective surface (141) for engaging and holding by suctioning the product, which supporting pins (1234) can be blocked in the corresponding, preferably perpendicular, position, especially through corresponding tightening screws (1235).

59. The device according to any of the preceding claims or according to the pre-characterizing part of claim 1, **characterized in that** attachment means (17) are provided, in particular for a rapid attachment to means for moving said device (10), in particular defined by the arm of a corresponding robot.

60. The device according to claim 59, **characterized in that** said attachment means (17), in particular for a rapid attachment to means for moving said device (10), in particular defined by the arm of a corresponding robot, are provided on said connecting means (123) between said first and second supporting bodies (121, 122) define, and in particular extend superiorly from the same connecting means, or bracket, (123) between said first and second supporting bodies (121, 122).

61. The device according to any of the preceding claims or according to the pre-characterizing part of claim 1, **characterized in that** means (22) for releasing the product from the device are provided.

62. The device according to claim 61, **characterized in that** said means for releasing the product from the device comprise means (221, 222) for ejecting a compressed air flow at the respective surface (141, 142) for engaging and holding by suctioning the same product, in particular at said first and second surfaces (141, 142) for engaging and holding by suctioning the same product.

63. The device according to claim 62, **characterized in that** said means for releasing the product from the device comprise respective first and second conduits (221, 222) for ejecting a compressed air flow in connection with said first and second suctioning chambers (161, 162) respectively upstream of said first and second surfaces (141, 142) for engaging and holding by suctioning the same product, and in particular provided at the respective first and second supporting bodies (121, 122) of the device (10).

64. The device according to any of the preceding claims da 29 a 63, **characterized in that** the respective supporting body (122), in particular said second supporting body (122) of the device (10), has rear supporting means (1220) of the respective pad (182), preferably made of elastic material, defining said surface (142) for engaging and holding by suctioning the product.

65. The device according to claim 64, **characterized in that** said rear supporting means of the respective pad (182), preferably of elastic material, defining said surface (142) for engaging and holding by suctioning the product, comprise a plurality of transversal ribs (1220), defining anteriorly the corresponding suctioning chamber (162), and spaced apart one from the other to define a suitable passage for the suctioning flow of the product.

66. The device according to any of the preceding claims or according to the pre-characterizing part of claim 1, **characterized in that** said means (14) for engaging by suctioning the respective product, in particular the surface (141, 142) for engaging and holding by suctioning the same product, i.e., the respective supporting body (121, 122), have, or has, an elongated, in particular longitudinally elongated shape.

67. The device according to any of the preceding claims or according to the pre-characterizing part of claim 1, **characterized in that** said means (14) for engaging by suctioning the respective product, in particular the respective surface (142) for engaging and holding by suctioning the same product have, i.e., the respective supporting body (121, 122), have, or has, a substantially or generally quadrangular shape, in particular a square or rectangular shape.

68. The device according to any of the preceding claims or according to the pre-characterizing part of claim 1, **characterized in that** the respective surface (141, 142) for engaging and holding by suctioning the same product has a generally elliptical configuration, in particular having a profile composed of parallel longitudinal lengths (1401, 140l) joined to one another at the opposite longitudinal ends through corresponding semi-circular, or substantially semi-circular, lengths, (140c, 140c).

69. The device according to any of the preceding claims or according to the pre-characterizing part of claim 1, **characterized in that** the respective engaging and holding surface, in particular the second surface (142) for engaging and holding by suctioning the same product, is defined by the front surface of a pad (182), preferably of elastic material, at the front face of the corresponding, or second, supporting body (122), which defines, with a respective shaped body (184) means for sealing the contact with the opposite surface of the product which define a first and a second suctioning zones (1800, 1800), in particular longitudinally mutually aligned.

70. The device according to any of the preceding claims or according to the pre-characterizing part of claim 1, **characterized in that** said supporting means (12), i.e., said first and second supporting bodies (121, 122), are of plastic material, preferably obtained through a tridimensional printer.

71. A device, **characterized in that** it is produced according to any of the preceding claims and/or as described and illustrated with reference to the attached drawings.
